# EUROPEAN PATENT APPLICATION

(11) **EP 4 694 286 A1**
(43) Date of publication of application: **11.02.2026**
(21) Application number: 24806218.4
(22) Date of filing: 03.04.2024
(51) Int. Cl.: H04W 24/02

(54) **COMMUNICATION METHOD AND RELATED DEVICE**

(30) Priority: 18.05.2023 CN 202310566983
(71) Applicant: Huawei Technologies Co., Ltd., Shenzhen, Guangdong 518129 (CN)
(72) Inventor: DENG, Ailin, Shenzhen, Guangdong 518129 (CN); ZHOU, Qiang, Shenzhen, Guangdong 518129 (CN); GUAN, Lu, Shenzhen, Guangdong 518129 (CN); XIONG, Jing, Shenzhen, Guangdong 518129 (CN)
(74) Representative: Gill Jennings & Every LLP
(86) International application number: PCT/CN2024/085901
(87) International publication number: WO 2024/234859

(57) **Abstract**

This application provides a communication method and a related device, so that a first network device can quickly sense a terminal device in a coverage area of the first network device through interaction between a first signal and a second signal, and the first network device can subsequently perform network scheduling based on a sensing result, to improve communication efficiency. In the method, a terminal device receives a first signal of a first network device, where the first signal is used to sense a terminal device; and the terminal device sends a second signal, where the second signal is used to respond to the first signal.

## Description

This application claims priority to Chinese Patent Application No. 202310566983.4, filed with the China National Intellectual Property Administration on May 18, 2023, and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Wireless communication may be transmission communication performed between two or more communication nodes without propagation via a conductor or a cable or with propagation via an air interface. For example, the communication node includes a network device and a terminal device. Generally, the terminal device may access the network device, and receive scheduling and indication information of the network device, to implement wireless communication.

With large-scale commercial use of wireless communication networks, research on future-oriented communication networks has become a research hotspot of global mobile communication. The industry imposes a high requirement on a key capability of a future communication network (for example, a 6th generation (6th generation, 6G) network). For example, the industry expects that a peak throughput of the future communication network reaches 1 terabit per second, and a single-user experience rate reaches 1 gigabit per second (gigabit per second, Gbps). This target is significantly improved compared with that of a 5th generation (5th generation, 5G) network. Based on a high performance requirement of the future communication network, it is important to study communication efficiency of the future communication network.

### SUMMARY

This application provides a communication method and a related device, so that a first network device can quickly sense a terminal device in a coverage area of the first network device through interaction between a first signal and a second signal, and the first network device can subsequently perform network scheduling based on a sensing result, to improve communication efficiency.

A first aspect of this application provides a communication method. The method is performed by a terminal device, or the method is performed by some components (for example, a processor, a chip, or a chip system) in the terminal device, or the method may be implemented by a logic module or software that can implement all or some functions of the terminal device. In the first aspect and possible implementations of the first aspect, an example in which the communication method is performed by the terminal device is used for description. In the method, a terminal device receives a first signal of a first network device, where the first signal is used to sense a terminal device; and the terminal device sends a second signal, where the second signal is used to respond to the first signal.

According to the foregoing technical solution, the first signal of the first network device that is received by the terminal device is used to sense the terminal device. Then, the terminal device sends the second signal used to respond to the first signal, so that after receiving the second signal, the first network device can sense, based on the second signal, that a terminal device exists in a coverage area of the first network device. In this way, the first network device can quickly sense the terminal device through interaction between the first signal and the second signal, so that the first network device can subsequently perform network scheduling based on a sensing result, to improve communication efficiency.

In addition, compared with an implementation of performing network scheduling based on an amount of data transmitted by a terminal device in an RRC connected state, the foregoing technical solution can quickly sense a terminal device, to avoid impact caused by mismatch between a traffic volume determined by the first network device and a terminal device in a signal coverage area of the first network device, thereby optimizing network scheduling.

In a possible implementation, that the first signal is used to sense the terminal device may be understood as that the first signal is used to sense whether a terminal device exists in a coverage area of the first network device. The coverage area of the first network device may be replaced with a coverage area of the first network device for receiving a signal and/or sending a signal, a cellular network range of the first network device, a communication reachable range of the first network device, or another description.

In a possible implementation, that the first signal is used to sense the terminal device may be replaced with that the first signal is used to probe (or identify, detect, determine, search, or the like) whether the terminal device exists.

In a possible implementation of the first aspect, the first signal of the first network device is the same as a first signal of a second network device.

According to the foregoing technical solution, the first network device and the second network device may send the same first signal. The first signal sent by the first network device is used to sense whether a terminal device exists in the coverage area of the first network device, and the first signal sent by the second network device is used to sense whether a terminal device exists in a coverage area of the second network device. Therefore, different network devices may reuse a same first signal to sense a terminal device in respective coverage areas, thereby simplifying implementation complexity of the network devices. After receiving the first signal, the terminal device does not need to sense whether the first signal is from the first network device or the second network device.

In addition, in a conventional interaction process based on a synchronization signal block (synchronization signal/physical broadcast channel block, SS/PBCH block, SS/PBCH block, or SSB) and a random access preamble (preamble), an identifier (for example, a physical cell identifier (physical cell identifier, PCI)) of a network device needs to be carried in the SSB, to distinguish between different network devices. However, in the foregoing technical solution, different network devices may sense terminal devices in respective coverage areas by using a same first signal, and an identifier of the network device may not need to be carried. This can reduce overheads, and reduce implementation complexity of the network device and parsing complexity of the terminal device, so that the network device can quickly perceive the terminal device based on the first signal.

It should be understood that the first network device and the second network device may be different network devices, and the different network devices may be replaced with different base stations (or macro base stations, micro base stations, pico base stations, femto base stations, or the like), network devices in different cells (or micro cells, macro cells, cellular cells, micro cellular cells, macro cellular cells, or the like), network devices of different operators, different network devices in a same group of a same operator (for example, the network devices in the same group of the same operator may sense terminal devices by using a same first signal, and network devices in different groups of a same operator may sense terminal devices by using different signals), or another description. The network devices in the different cells may be the same, for example, the different cells are different cells managed by a same network device; or the network devices in the different cells may be different, for example, the different cells are different cells managed by different network devices. The network devices of the different operators may be the same, for example, the different operators may share a network device; or the network devices of the different operators may be different, for example, the different operators may perform standalone networking, that is, the different operators use respective network devices.

In a possible implementation of the first aspect, a signal sequence carried by the first signal is preconfigured.

According to the foregoing technical solution, the signal sequence carried by the first signal used to sense the terminal device is preconfigured, so that the network device can send the first signal by using the preconfigured signal sequence, thereby reducing implementation complexity of the network device.

In addition, the terminal device may parse (or identify, determine, or the like) a meaning of the first signal in a preconfiguration manner, so that implementation complexity of the terminal device can also be reduced.

In a possible implementation, the foregoing technical solution can be applied to an energy saving scenario of the network device. For example, when the network device is in a first mode, the network device may send a first signal that carries a preconfigured signal sequence. After the network device receives a second signal, the network device may be updated from the first mode to a second mode, where power consumption of the first mode is lower than power consumption of the second mode. In other words, in the foregoing technical solution, the network device can sense the terminal device in a low power consumption mode, and after sensing the terminal device based on the second signal, the network device can quickly and accurately switch to a normal power consumption mode or the second mode with high power consumption, to provide a network service.

In a possible implementation of the first aspect, that the terminal device receives the first signal of the first network device includes: The terminal device receives the first signal after the terminal device determines that no SSB can be found.

According to the foregoing technical solution, the terminal device may attempt to search for an SSB, and after determining that no SSB can be found, the terminal device attempts to search for a first signal; and after successfully receiving the first signal, the terminal device sends a second signal used to respond to the first signal. In other words, when the terminal device determines that the terminal device cannot access the network device in process of interaction between an SSB and a random access preamble, the terminal device may indicate, to the network device through interaction between the first signal and the second signal, that the terminal device is located in a coverage area of the network device, so that the network device can sense the terminal device through interaction between the first signal and the second signal.

It should be understood that, that the terminal device determines that no SSB can be found may be replaced with that the terminal device (determines that) no SSB can be detected, the terminal device (determines that) no SSB can be normally detected, the terminal device (determines that) attempting to detect an SSB fails, the terminal device (determines that) detecting an SSB fails, or another description.

In a possible implementation of the first aspect, the first signal satisfies at least one of the following:
the first signal is used for time synchronization and/or frequency synchronization;
the first signal is a periodic signal;
the first signal does not carry cell identifier information;
the first signal does not carry a primary synchronization signal (primary synchronization signal, PSS);
the first signal does not carry a secondary synchronization signal (secondary synchronization signal, SSS);
the first signal does not carry system information and/or a broadcast message;
the first signal does not carry a master information block (master information block, MIB);
the first signal does not carry at least one of a system information block (system information block, SIB) 1 to a SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

According to the foregoing technical solution, the first signal satisfies at least one of the foregoing items, to provide a plurality of implementations of the first signal, and a corresponding gain can be obtained in the foregoing implementation.

For example, when the first signal is used for time synchronization and/or frequency synchronization, the terminal device can determine, based on the first signal, a location of a time unit and/or a frequency domain unit that carry/carries the second signal, and the first network device can receive the second signal at a corresponding time unit and/or frequency domain unit location, thereby avoiding overheads caused by blind detection.

For another example, when the first signal is a periodic signal, compared with a manner of aperiodic sensing (for example, a burst signal), a success rate of sensing the terminal device by the network device can be improved.

For another example, when the first signal does not carry at least one of cell identifier information/system information/broadcast message/PSS/SSS/MIB/SIB 1 to SIB 19/paging message, implementation complexity of the first signal can be simplified as much as possible, power consumption of parsing the first signal by the terminal device can be reduced, and the terminal device can also be quickly sensed based on the first signal.

For another example, when an association relationship between the first signal and the SSB satisfies the foregoing implementation, some features of the SSB can be reused, so that a coverage area implemented by the network device by using the SSB is the same as or similar to a coverage area implemented by the network device by using the first signal, and a terminal device in the coverage area of the network device can be sensed by using the first signal, and can also access a network by using the SSB.

For another example, when the signal sequence carried by the first signal is orthogonal to the signal sequence carried by the second signal, when some terminal devices have sent the second signal based on the first signal, and there are both the first signal and the second signal in space, another terminal device or network device can accurately identify the first signal and the second signal based on the orthogonal signal sequences, thereby avoiding signal misdetection (or misjudgment).

In a possible implementation, the PSS and/or the SSS may be used to carry one or more of a physical cell identity (physical cell identifier, PCI), timing synchronization, frequency synchronization, radio frame timing, subframe timing, a cyclic prefix (cyclic prefix, CP) format, and a duplex format.

In a possible implementation, any one of the foregoing thresholds may be 0, may be preconfigured, or may be configured by the network device. This is not limited herein. Different thresholds are set independently, or different thresholds may have an association relationship. This is not limited.

In a possible implementation of the first aspect, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

According to the foregoing technical solution, the second signal satisfies at least one of the foregoing items, to provide a plurality of implementations of the second signal, and a corresponding gain can be obtained in the foregoing implementation.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal and the random access preamble meet the foregoing association relationship, implementation complexity can be reduced and power consumption can be reduced by reusing signal features of different signals.

For another example, when the location of the time unit that carries the second signal is determined based on the random number, a signaling storm generated when a plurality of terminal devices send the second signal at a same moment can be avoided as much as possible, to improve network robustness.

For another example, when the deviation between the time domain location of the first signal and the time domain location of the second signal is preconfigured, the terminal device sends the second signal at the preconfigured time domain location, and the network device receives the second signal at the preconfigured time domain location. This can reduce implementation complexity and improve a success rate of sensing the terminal device by the network device based on the second signal.

In a possible implementation of the first aspect, the first signal carries first indication information, and the first indication information is used to trigger the second signal.

According to the foregoing technical solution, when the first signal carries the first indication information, after receiving the first signal, the terminal device may trigger sending of the second signal based on the first indication information in the first signal.

In a possible implementation, the first indication information may be used to trigger a terminal device in an RRC connected state, a terminal device in an RRC inactive state, and a terminal device in an RRC idle state to send the second signal, so as to sense various terminal devices.

In a possible implementation, the first indication information may be used to trigger a terminal device in an RRC idle state and/or a terminal device in an RRC inactive state to send the second signal. The network device can determine, based on data transmitted by the network device, whether a terminal device in an RRC connected state exists. Therefore, the terminal device in the RRC connected state may not need to send the second signal based on the first indication information, so that the network device can sense various terminal devices.

In a possible implementation, when the first signal carries the first indication information, the first signal may be an SSB or another broadcast signal, for example, any one of a SIB 1 to a SIB 19.

In a possible implementation, the foregoing technical solution can be applied to an energy saving scenario of the network device. For example, when the network device is in a second mode, the network device may send the first signal that carries the first indication information, and after the network device determines that the second signal is not received, the network device may be updated from the second mode to a first mode, where power consumption of the first mode is lower than power consumption of the second mode. In other words, in the foregoing technical solution, the network device can sense the terminal device in a high power consumption mode, and can quickly and accurately switch to a low power consumption mode after determining that the second signal is not received, that is, determining that the terminal device is not sensed, to reduce power consumption of the network device.

In a possible implementation of the first aspect, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

According to the foregoing technical solution, the second signal satisfies at least one of the foregoing items, to provide a plurality of implementations of the second signal, and a corresponding gain can be obtained in the foregoing implementation.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal and the random access preamble meet the foregoing association relationship, implementation complexity can be reduced and power consumption can be reduced by reusing signal features of different signals.

For another example, when the location of the time unit that carries the second signal is determined based on the random number, a signaling storm generated when a plurality of terminal devices send the second signal at a same moment can be avoided as much as possible, to improve network robustness.

For another example, when the deviation between the time domain location of the first signal and the time domain location of the second signal is preconfigured, the terminal device sends the second signal at the preconfigured time domain location, and the network device receives the second signal at the preconfigured time domain location. This can reduce implementation complexity and improve a success rate of sensing the terminal device by the network device based on the second signal.

A second aspect of this application provides a communication method. The method is performed by a first network device, or the method is performed by some components (for example, a processor, a chip, or a chip system) in the first network device, or the method may be implemented by a logical module or software that can implement all or some functions of the first network device. In the second aspect and possible implementations of the second aspect, an example in which the method is performed by the first network device is used for description. In the method, the first network device determines a first signal, where the first signal is used to sense a terminal device; and the first network device sends the first signal.

According to the foregoing technical solution, the first signal sent by the first network device is used to sense the terminal device. In this way, the first network device can quickly sense a terminal device in a coverage area of the first network device through interaction with the first signal, so that the first network device can subsequently perform network scheduling based on a sensing result, to improve communication efficiency.

In addition, compared with an implementation of performing network scheduling based on an amount of data transmitted by a terminal device in an RRC connected state, the foregoing technical solution can quickly sense a terminal device in the coverage area of the first network device, to avoid impact caused by mismatch between a traffic volume determined by the first network device and a terminal device in a signal coverage area of the first network device, thereby optimizing network scheduling.

In a possible implementation of the second aspect, the first signal of the first network device is the same as a first signal of a second network device.

According to the foregoing technical solution, the first network device and the second network device may send the same first signal. The first signal sent by the first network device is used to sense whether a terminal device exists in the coverage area of the first network device, and the first signal sent by the second network device is used to sense whether a terminal device exists in a coverage area of the second network device. Therefore, different network devices may reuse a same first signal to sense a terminal device in respective coverage areas, thereby simplifying implementation complexity of the network devices.

In addition, in a conventional interaction process based on a synchronization signal block (synchronization signal/physical broadcast channel block, SS/PBCH block, SS/PBCH block, or SSB) and a random access preamble (preamble), an identifier (for example, a physical cell identifier (physical cell PCI)) of a network device needs to be carried in the SSB, to distinguish between different network devices. However, in the foregoing technical solution, different network devices may sense terminal devices in respective coverage areas by using a same first signal, and an identifier of the network device may not need to be carried. This can reduce overheads, and reduce implementation complexity of the network device and parsing complexity of the terminal device, so that the network device can quickly perceive the terminal device based on the first signal.

In a possible implementation of the second aspect, a signal sequence carried by the first signal is preconfigured.

According to the foregoing technical solution, the signal sequence carried by the first signal used to sense the terminal device is preconfigured, so that the network device can send the first signal by using the preconfigured signal sequence, thereby reducing implementation complexity of the network device.

In addition, the terminal device may parse (or identify, determine, or the like) a meaning of the first signal in a preconfiguration manner, so that implementation complexity of the terminal device can also be reduced.

In a possible implementation of the second aspect, the method further includes: Before the first network device receives a second signal, the first network device determines not to send an SSB, where the second signal is used to respond to the first signal; and/or after the first network device receives N second signals, the first network device sends the SSB, where N is a positive integer.

According to the foregoing technical solution, after the first network device sends the first signal, and before the first network device receives the second signal used to respond to the first signal, the first network device determines not to send the SSB. In other words, before sensing the terminal device, the first network device may not send the SSB, so that power consumption can be reduced. After the first network device receives the N second signals, the first network device sends the SSB, that is, after sensing the terminal device based on the second signal, the first network device may send the SSB, so that the terminal device can access the first network device based on the SSB and obtain a network service.

In a possible implementation of the second aspect, the method is applied to the first network device. Before the first network device receives the second signal, the first network device is in a first mode; and after the first network device receives the second signal, the first network device is updated from the first mode to a second mode, where power consumption of the first mode is lower than power consumption of the second mode.

According to the foregoing technical solution, before the first network device receives the second signal, when the first network device is in the first mode, the network device may send a first signal that carries a preconfigured signal sequence. After the network device receives the second signal, the network device may be updated from the first mode to the second mode, where the power consumption of the first mode is lower than the power consumption of the second mode. In other words, this implementation can be applied to an energy saving scenario of the first network device, so that the network device can sense the terminal device in a low power consumption mode, and can quickly and accurately switch to a normal power consumption mode after sensing the terminal device based on the second signal, to provide a network service.

In a possible implementation of the second aspect, when the first network device is in the first mode, the method further includes: The first network device determines not to send one or more of the following: an SSB, information carried by a physical downlink control channel (physical downlink control channel, PDCCH), information carried by a physical downlink shared channel (physical downlink shared channel, PDSCH), a demodulation reference signal (demodulation reference signal, DMRS), and a channel state information-reference signal (channel state information reference signal, CSI-RS); and/or the first network device determines not to receive one or more of the following: information carried by a physical random access channel (physical random access channel, PRACH), information carried by a physical uplink control channel (physical uplink control channel, PUCCH), information carried by a physical uplink shared channel (physical uplink shared channel, PUSCH), a DMRS, and a sounding reference signal (sounding reference signal, SRS).

According to the foregoing technical solution, when the first network device is in the first mode (that is, a low power consumption mode), the first network device may sense the terminal device by using the first signal, and the first network device may not send or receive one or more of the foregoing, so that overheads can be reduced.

In a possible implementation of the second aspect, the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

According to the foregoing technical solution, the first signal satisfies at least one of the foregoing items, to provide a plurality of implementations of the first signal, and a corresponding gain can be obtained in the foregoing implementation.

For example, when the first signal is used for time synchronization and/or frequency synchronization, the terminal device can determine, based on the first signal, a location of a time unit and/or a frequency domain unit that carry/carries the second signal, and the first network device can receive the second signal at a corresponding time unit and/or frequency domain unit location, thereby avoiding overheads caused by blind detection.

For another example, when the first signal is a periodic signal, compared with a manner of aperiodic sensing (for example, a burst signal), a success rate of sensing the terminal device by the network device can be improved.

For another example, when the first signal does not carry at least one of cell identifier information/system information/broadcast message/PSS/SSS/MIB/SIB 1 to SIB 19/paging message, implementation complexity of the first signal can be simplified as much as possible, power consumption of parsing the first signal by the terminal device can be reduced, and the terminal device can also be quickly sensed based on the first signal.

For another example, when an association relationship between the first signal and the SSB satisfies the foregoing implementation, some features of the SSB can be reused, so that a coverage area implemented by the network device by using the SSB is the same as or similar to a coverage area implemented by the network device by using the first signal, and a terminal device in the coverage area of the network device can be sensed by using the first signal, and can also access a network by using the SSB.

For another example, when the signal sequence carried by the first signal is orthogonal to the signal sequence carried by the second signal, when some terminal devices have sent the second signal based on the first signal, and there are both the first signal and the second signal in space, another terminal device or network device can accurately identify the first signal and the second signal based on the orthogonal signal sequences, thereby avoiding signal misdetection (or misjudgment).

In a possible implementation, the PSS and/or the SSS may be used to carry one or more of a physical cell identity (physical cell identifier, PCI), timing synchronization, frequency synchronization, radio frame timing, subframe timing, a cyclic prefix (cyclic prefix, CP) format, and a duplex format.

In a possible implementation, any one of the foregoing thresholds may be 0, may be preconfigured, or may be configured by the network device. This is not limited herein. Different thresholds are set independently, or different thresholds may have an association relationship. This is not limited.

In a possible implementation of the second aspect, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

According to the foregoing technical solution, the second signal satisfies at least one of the foregoing items, to provide a plurality of implementations of the second signal, and a corresponding gain can be obtained in the foregoing implementation.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal and the random access preamble meet the foregoing association relationship, implementation complexity can be reduced and power consumption can be reduced by reusing signal features of different signals.

For another example, when the location of the time unit that carries the second signal is determined based on the random number, a signaling storm generated when a plurality of terminal devices send the second signal at a same moment can be avoided as much as possible, to improve network robustness.

For another example, when the deviation between the time domain location of the first signal and the time domain location of the second signal is preconfigured, the terminal device sends the second signal at the preconfigured time domain location, and the network device receives the second signal at the preconfigured time domain location. This can reduce implementation complexity and improve a success rate of sensing the terminal device by the network device based on the second signal.

In a possible implementation of the second aspect, the first signal carries first indication information, the first indication information is used to trigger the second signal, and the second signal is used to respond to the first signal.

According to the foregoing technical solution, when the first signal carries the first indication information, after receiving the first signal, the terminal device may trigger sending of the second signal based on the first indication information in the first signal.

In a possible implementation, the first indication information may be used to trigger a terminal device in an RRC connected state, a terminal device in an RRC inactive state, and a terminal device in an RRC idle state to send the second signal, so as to sense various terminal devices.

In a possible implementation, the first indication information may be used to trigger a terminal device in an RRC idle state and/or a terminal device in an RRC inactive state to send the second signal. The network device can determine, based on data transmitted by the network device, whether a terminal device in an RRC connected state exists. Therefore, the terminal device in the RRC connected state may not need to send the second signal based on the first indication information, so that the network device can sense various terminal devices.

In a possible implementation, when the first signal carries the first indication information, the first signal may be an SSB or another broadcast signal, for example, any one of a SIB 1 to a SIB 19.

In a possible implementation of the second aspect, the method further includes: After the first network device receives the second signal, the first network device sends an SSB, where the second signal is used to respond to the first signal; and/or after the first network device determines that the second signal is not received, determines not to send the SSB.

According to the foregoing technical solution, after the first network device sends the first signal, and the first network device receives the second signal used to respond to the first signal, the first network device sends the SSB. In other words, after sensing the terminal device based on the second signal, the first network device may send the SSB, so that the terminal device can access the first network device based on the SSB and obtain a network service. After the first network device determines that the second signal is not received, the first network device determines not to send the SSB. In other words, before sensing the terminal device, the first network device may not send the SSB, so that power consumption can be reduced.

In a possible implementation of the second aspect, the method is applied to the first network device. When the first network device receives the second signal, the first network device keeps in a second mode; and after the first network device determines that the second signal is not received, the first network device is updated from the second mode to a first mode, where power consumption of the first mode is lower than power consumption of the second mode.

According to the foregoing technical solution, before the first network device receives the second signal, when the first network device is in the second mode, the first network device may send the first signal that carries the first indication information. When the network device determines that the second signal is received, the network device may keep in a low power consumption mode in the second mode. After the network device determines that the second signal is not received, the network device may be updated from the second mode to the first mode, where the power consumption of the first mode is lower than the power consumption of the second mode. In other words, in the foregoing technical solution, the network device can sense the terminal device in a high power consumption mode, and can quickly and accurately switch to a low power consumption mode after determining that the second signal is not received, that is, determining that the terminal device is not sensed, to reduce power consumption of the network device.

In a possible implementation, when the first signal is a periodic signal, that the first network device determines that the second signal is not received may include: The first network device determines that the second signal is not received in duration in which the first signal in M (M is a positive integer) periodicities is continuously sent. Similarly, that the first network device receives the second signal may include: The first network device determines that one or more second signals are received in duration in which the first signal in M (M is a positive integer) periodicities is continuously sent. Further, in a possible implementation, a value of N is the same as that of M, or a value of N is different from that of M.

In a possible implementation, regardless of whether the first signal is a periodic signal or the first signal is not a periodic signal, that the first network device determines that the second signal is not received may include: The first network device does not receive the second signal in preset duration after a sending moment of a first signal. Similarly, that the first network device receives the second signal may include: The first network device determines, in preset duration after a sending moment of a first signal, that one or more second signals are received.

In a possible implementation of the second aspect, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

According to the foregoing technical solution, the second signal satisfies at least one of the foregoing items, to provide a plurality of implementations of the second signal, and a corresponding gain can be obtained in the foregoing implementation.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal and the random access preamble meet the foregoing association relationship, implementation complexity can be reduced and power consumption can be reduced by reusing signal features of different signals.

For another example, when the location of the time unit that carries the second signal is determined based on the random number, a signaling storm generated when a plurality of terminal devices send the second signal at a same moment can be avoided as much as possible, to improve network robustness.

For another example, when the deviation between the time domain location of the first signal and the time domain location of the second signal is preconfigured, the terminal device sends the second signal at the preconfigured time domain location, and the network device receives the second signal at the preconfigured time domain location. This can reduce implementation complexity and improve a success rate of sensing the terminal device by the network device based on the second signal.

In a possible implementation of the second aspect, the method is applied to the first network device. The first network device includes a first communication module and a second communication module, where the first signal is sent via the first communication module, and the SSB is sent via the second communication module; or the first network device includes a third communication module, where the first signal is sent via the third communication module, and the third communication module is configured to send at least one of the following: an SSB (when the first signal is a signal other than an SSB, for example, any one of a SIB 1 to a SIB 19), information carried by a PDCCH, information carried by a PDSCH, a DMRS, and a CSI-RS, and/or the third communication module is configured to receive at least one of the following: information carried by a PRACH, information carried by a PUCCH, information carried by a PUSCH, and an SRS.

According to the foregoing technical solution, the first network device may send the first signal in any one of the foregoing manners, and obtain a corresponding gain.

For example, when the first network device separately sends the SSB and the first signal via different communication modules, the first network device may sleep/disable a communication module of the other signal in a process of sending one of the signals, so that energy consumption can be reduced.

For another example, when the first network device sends the first signal via the third communication module, implementation complexity can be reduced, and a communication module that reuses another signal can send the first signal.

It should be understood that sending of the first signal and receiving of the second signal may be implemented via a same communication module in the first network device.

It should be understood that the communication module configured to send the SSB may be further configured to: receive and send another signal. For example, the communication module may be further configured to send one or more of the following: information carried by a PDCCH, information carried by a PDSCH, a DMRS, a CSI-RS, and the like. For another example, the communication module may be further configured to receive one or more of the following: information carried by a PRACH, information carried by a PUCCH, information carried by a PUSCH, a DMRS, an SRS, and the like.

A third aspect of this application provides a communication apparatus. The communication apparatus can implement the method according to any one of the first aspect or the possible implementations of the first aspect. The communication apparatus includes a corresponding unit or module configured to perform the foregoing method. The unit or module included in the communication apparatus may be implemented by software and/or hardware. For example, the apparatus may be a terminal device, or the apparatus may be a component (for example, a processor, a chip, or a chip system) in the terminal device, or the apparatus may be a logic module or software that can implement all or some functions of the terminal device.

The communication apparatus includes a processing unit and a transceiver unit. The transceiver unit is configured to receive a first signal of a first network device, where the first signal is used to sense a terminal device. The processing unit is configured to determine a second signal, where the second signal is used to respond to the first signal. The transceiver unit is further configured to send the second signal.

In a possible implementation of the third aspect, the first signal of the first network device is the same as a first signal of a second network device.

In a possible implementation of the third aspect, a signal sequence carried by the first signal is preconfigured.

In a possible implementation of the third aspect, that the transceiver unit is configured to receive the first signal of the first network device includes: The transceiver unit receives the first signal after the processing unit determines that no synchronization signal block SSB can be found.

In a possible implementation of the third aspect, the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

In a possible implementation of the third aspect, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

In a possible implementation of the third aspect, the first signal carries first indication information, and the first indication information is used to trigger the second signal.

In a possible implementation of the third aspect, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

In the third aspect, the processing unit and the transceiver unit may be further configured to perform the steps performed in the possible implementations of the first aspect, and implement corresponding technical effects. For details, refer to the first aspect. Details are not described herein again.

A fourth aspect of this application provides a communication apparatus. The communication apparatus can implement the method according to any one of the second aspect or the possible implementations of the second aspect. The communication apparatus includes a corresponding unit or module configured to perform the foregoing method. The unit or module included in the communication apparatus may be implemented by software and/or hardware. For example, the apparatus may be a first network device, or the apparatus may be a component (for example, a processor, a chip, a chip system, a DU, an RU, a BBU, or an RRU) in the first network device, or the apparatus may be a logical module or software that can implement all or some functions of the first network device.

The communication apparatus includes a processing unit and a transceiver unit. The processing unit is configured to determine a first signal, where the first signal is used to sense a terminal device. The transceiver unit is configured to send the first signal.

In a possible implementation of the fourth aspect, the first signal of the first network device is the same as a first signal of a second network device.

In a possible implementation of the fourth aspect, a signal sequence carried by the first signal is preconfigured.

In a possible implementation of the fourth aspect, before the transceiver unit receives a second signal, the processing unit determines not to send a synchronization signal block SSB, where the second signal is used to respond to the first signal; and/or after the transceiver unit receives N second signals, the transceiver unit is further configured to send the SSB, where N is a positive integer.

In a possible implementation of the fourth aspect, before the transceiver unit receives the second signal, the first network device is in a first mode; and after the transceiver unit receives the second signal, the processing unit updates the first network device from the first mode to a second mode, where power consumption of the first mode is lower than power consumption of the second mode.

In a possible implementation of the fourth aspect, when the first network device is in the first mode, the transceiver unit determines not to send one or more of the following: an SSB, information carried by a physical downlink control channel PDCCH, information carried by a physical downlink shared channel PDSCH, a demodulation reference signal DMRS, and a channel state information-reference signal CSI-RS; and/or the transceiver unit determines not to receive one or more of the following: information carried by a physical random access channel PRACH, information carried by a physical uplink control channel PUCCH, information carried by a physical uplink shared channel PUSCH, a DMRS, and a sounding reference signal SRS.

In a possible implementation of the fourth aspect, the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

In a possible implementation of the fourth aspect, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

In a possible implementation of the fourth aspect, the first signal carries first indication information, the first indication information is used to trigger the second signal, and the second signal is used to respond to the first signal.

In a possible implementation of the fourth aspect, after the transceiver unit receives the second signal, the transceiver unit is further configured to send an SSB, where the second signal is used to respond to the first signal; and/or after the processing unit determines that the second signal is not received, the processing unit is further configured to determine not to send the SSB.

In a possible implementation of the fourth aspect, the apparatus is used in the first network device. Before the transceiver unit receives the second signal, the first network device keeps in a second mode; and after the processing unit determines that the second signal is not received, the processing unit updates the first network device from the second mode to a first mode, where power consumption of the first mode is lower than power consumption of the second mode.

In a possible implementation of the fourth aspect, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

In a possible implementation of the fourth aspect, the apparatus is used in the first network device. The first network device includes a first communication module and a second communication module, where the first signal is sent via the first communication module, and the SSB is sent via the second communication module; or the first network device includes a third communication module, where the first signal is sent via the third communication module, and the third communication module is configured to send at least one of the following: an SSB (when the first signal is a signal other than an SSB, for example, any one of a SIB 1 to a SIB 19), information carried by a PDCCH, information carried by a PDSCH, a DMRS, and a CSI-RS, and/or the third communication module is configured to receive at least one of the following: information carried by a PRACH, information carried by a PUCCH, information carried by a PUSCH, and an SRS.

In the fourth aspect, the processing unit and the transceiver unit may be further configured to perform the steps performed in the possible implementations of the second aspect, and implement corresponding technical effects. For details, refer to the second aspect. Details are not described herein again.

A fifth aspect of this application provides a communication apparatus, including at least one processor. The at least one processor is coupled to a memory, and the processor is configured to perform the method according to any one of the first aspect or the possible implementations of the first aspect.

For example, the memory is configured to store a program or instructions, and the at least one processor is configured to execute the program or the instructions, so that the apparatus implements the method according to any one of the first aspect or the possible implementations of the first aspect.

A sixth aspect of this application provides a communication apparatus, including at least one processor. The at least one processor is coupled to a memory, and the processor is configured to perform the method according to any one of the second aspect or the possible implementations of the second aspect.

For example, the memory is configured to store a program or instructions, and the at least one processor is configured to execute the program or the instructions, so that the apparatus implements the method according to any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

A ninth aspect of this application provides a computer-readable storage medium. The computer-readable storage medium is configured to store one or more computer executable instructions. When the computer executable instructions are executed by a processor, the processor performs the method according to any one of the possible implementations of either of the first aspect and the second aspect.

A tenth aspect of this application provides a computer program product (also referred to as a computer program). When the computer program product is executed by a processor, the processor performs the method according to any one of the possible implementations of either of the first aspect and the second aspect.

An eleventh aspect of this application provides a chip system. The chip system includes at least one processor, configured to support a communication apparatus in implementing a function in any one of the possible implementations of either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the communication apparatus in the fourth aspect, or the communication system includes the communication apparatus in the fifth aspect and the communication apparatus in the sixth aspect, or the communication system includes the communication apparatus in the seventh aspect and the communication apparatus in the eighth aspect.

For technical effects brought by any one of the third aspect to the twelfth aspect, refer to the technical effects brought by the first aspect and the second aspect and different designs of the first aspect and the second aspect. Details are not described herein again.

### BRIEF DESCRIPTION OF DRAWINGS

FIG. 1 is a diagram of an application scenario according to this application;
FIG. 2 is a diagram of a communication method according to this application;
FIG. 3 to FIG. 10 are some diagrams corresponding to application examples of communication methods according to this application; and
FIG. 11 to FIG. 14 are some diagrams of communication apparatuses according to this application.

### DESCRIPTION OF EMBODIMENTS

Some terms in this application are first described, to help a person skilled in the art have a better understanding.

(1) Terminal device: may be a device that can communicate with a network device, for example, may be a wireless terminal device that can receive scheduling information of the network device. The wireless terminal device may be a device that provides a user with voice and/or data connectivity, or a handheld device with a wireless connection function, or another processing device connected to a wireless modem.

The terminal device may communicate with one or more core networks or the internet through a radio access network (radio access network, RAN). The terminal device may also be referred to as a terminal, a user equipment (user equipment, UE), a mobile station, a mobile terminal, or the like. The terminal device may be widely applied to various scenarios, for example, device-to-device (device-to-device, D2D), vehicle-to-everything (vehicle-to-everything, V2X) communication, machine-type communication (machine-type communication, MTC), internet of things (internet of things, IoT), ultra-reliable and low-latency communication (ultra-reliable and low-latency communication, URLLC), enhanced mobile broadband (enhanced mobile broadband, eMBB), virtual reality, augmented reality, industrial control, autonomous driving, telemedicine, a smart grid, smart furniture, smart office, smart wearable, smart transportation, smart city, or satellite communication. The terminal may be a mobile phone, a tablet computer, a computer with a wireless transceiver function, a wearable device, a vehicle, an uncrewed aerial vehicle, a helicopter, an airplane, a hot-air balloon, a ship, a robot, a mechanical arm, a smart home device, or the like. A device form of the terminal is not limited in this application.

It should be noted that, in a communication system, the terminal device may be in different states, including an active state, an idle state, and the like. For example, when the terminal device is in an active state, a network device (for example, an access network device) may communicate with the terminal device through an RRC connection. Correspondingly, the network device may sense the terminal device through the RRC connection. For another example, when the terminal device is in an idle state, an RRC connection between a network device (for example, an access network device) and the terminal device is not established (or the RRC connection is released), and correspondingly, the network device cannot sense the terminal device through the RRC connection.

It should be understood that in different communication systems or different radio access technologies (radio access technology, RAT), the service mode and the idle mode may have different names/definitions. For example, in a long term evolution (long term evolution, LTE) or 4th generation (4th generation, 4G) mobile communication system, the active state may include an RRC connected state (RRC_CONNECTED), and the idle state may include an RRC idle state (RRC_IDLE). In a new radio (new radio, NR) or 5th generation (5th generation, 5G) mobile communication system, the active state may include an RRC connected state (RRC _CONNECTED), and the idle state may include an RRC idle state (RRC _IDLE) and/or an RRC inactive state (RRC _INACTIVE).

(2) Network device: may be a device in a wireless network. For example, the network device may be a radio access network (radio access network, RAN) node (or device) that connects a terminal device to the wireless network.

In some implementations, the network device may further include a satellite, an airplane, and the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, at least one of the following functions: an access and mobility management function (access and mobility management function, AMF), a user plane function (user plane function, UPF), or a session management function (session management function, SMF).

In this application, an apparatus configured to implement a function of the network device may be a network device, or may be an apparatus that can support the network device in implementing the function, for example, a processor, a circuit, a chip, or a chip system. The apparatus may be installed in the network device or connected to the network device for use. In the technical solutions provided in this application, an example in which the apparatus configured to implement the function of the network device is the network device is used to describe the technical solutions provided in this application.

In this application, an apparatus configured to implement a function of the terminal device may be a terminal device, or may be an apparatus that can support the terminal device in implementing the function, for example, a processor, a circuit, a chip, or a chip system. The apparatus may be installed in the terminal device or connected to the terminal device for use. In the technical solutions provided in this application, an example in which the apparatus configured to implement the function of the terminal device is the terminal device is used to describe the technical solutions provided in this application.

(3) Configuration and preconfiguration: In this application, the configuration and the preconfiguration may be used.

The configuration may mean that a network device/server sends configuration information of some parameters or parameter values to a terminal device by using a message or signaling, so that the terminal device determines a communication parameter or a transmission resource based on the values or the information.

The preconfiguration may be parameter information or a parameter value that is pre-negotiated by a network device/server and a terminal device, or may be parameter information or a parameter value that is used by a network device/server or a terminal device and that is specified in a standard protocol, or may be parameter information or a parameter value that is pre-stored in a network device/server or a terminal device. This is not limited in this application.

In a possible implementation, these values and parameters may be changed or updated.

(4) The terms "system" and "network" are used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in this application are used to distinguish between a plurality of objects, but are not used to limit a sequence, a time sequence, priorities, or importance of the plurality of objects.

This application may be applied to various possible communication systems. For example, this application may be applied to a long term evolution (long term evolution, LTE) system, a new radio (new radio, NR) system, an open radio access network (open RAN, O-RAN, or ORAN), a virtualized radio access network (virtualized RAN, vRAN), a cloud radio access network (cloud radio access network, CRAN), or a new radio vehicle-to-everything (NR vehicle-to-everything, NR V2X) system. Alternatively, this application may be applied to a system in hybrid networking of a plurality of access technologies (for example, LTE and 5G). Alternatively, this application may be applied to a device-to-device (device-to-device, D2D) communication system, a machine-to-machine (machine-to-machine, M2M) communication system, internet of things (Internet of Things, IoT), or an uncrewed aerial vehicle communication system. Alternatively, this application may be applied to a non-terrestrial communication system, for example, a satellite communication system or a high-altitude communication platform.

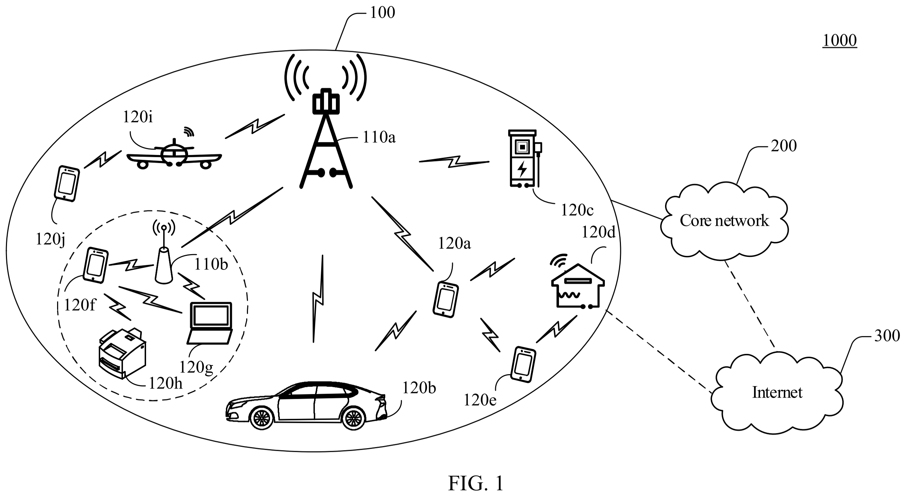

FIG. 1 is a diagram of a possible and non-limiting application scenario according to this application. The solutions provided in this application may be applied to a communication system 1000 shown in FIG. 1. As shown in FIG. 1, the communication system 1000 includes a radio access network (radio access network, RAN) 100 and a core network 200. The RAN 100 may include at least one RAN device (110a and 110b in FIG. 1, collectively referred to as 110). The RAN 100 may further include at least one terminal (120a to 120j in FIG. 1, collectively referred to as 120). The terminals 120a to 120j are connected to the RAN device 110 in a wireless manner. The RAN 100 may further include another RAN device, for example, a wireless relay device and/or a wireless backhaul device (not shown in FIG. 1). The access network device 110 is connected to the core network 200 in a wireless or wired manner. A core network device in the core network and an access network device in the radio access network may be different physical devices, or may be a same physical device that integrates a logical function of the core network and a logical function of the radio access network. This is not limited Terminals may be connected to each other in a wireless manner. Access network devices may be connected to each other in a wired or wireless manner. FIG. 1 is merely a diagram for illustration. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an O-RAN, a vRAN, or a CRAN. Alternatively, the RAN 100 may be a communication system that integrates the foregoing two or more systems.

The RAN device 110 may also be sometimes referred to as a RAN node, a RAN entity, an access node, or the like, and forms a part of the communication system, to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), a transmission reception point (transmission reception point, TRP), a next-generation NodeB (next-generation NodeB, gNB) in a 5G mobile communication system, a next-generation base station in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, a RAN node in a vehicle-to-everything (vehicle-to-everything, V2X) technology may be a roadside unit (roadside unit, RSU). A plurality of RAN nodes in the communication system may be base stations of a same type, or may be base stations of different types. The base station may communicate with a terminal, or may communicate with the terminal through a relay station. The terminal may communicate with a plurality of base stations in different access technologies.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. The CU (or the CU-CP and the CU-UP), the DU, and the RU can implement different functions.

The communication system shown in FIG. 1 is used as an example. To improve implementation flexibility of the network device, the network device or a network management device of the network device may assist, based on a traffic volume carried by the network device, the network device in making some network scheduling decisions.

In an implementation example, the network scheduling may include energy saving scheduling of the network device. For example, in a fixed time period (for example, 00:00 to 06:00), some or all network devices perform "shutdown" (including at least one of the following: symbol shutdown, carrier shutdown, channel shutdown, or the like), to save energy of the network device. However, the network device cannot transmit a service of the terminal device after being shut down, which greatly affects user experience. In an implementation process in which the network device or the network management device of the network device assists, based on the carried traffic volume, the network device in implementing energy saving, when the traffic volume carried by the network device is less than a threshold, the network device may implement energy saving of the network device in a shutdown mode. In addition, when the traffic volume carried by the network device is greater than a threshold, the network device may exit the shutdown mode, to provide a network service. Therefore, impact on service transmission of the terminal device can be avoided to some extent.

In another implementation example, the network scheduling may include power scheduling of the network device. For example, when energy of a signal received and sent by the network device remains unchanged, and the traffic volume carried by the network device is less than a threshold, the network device may provide a network service in a large signal coverage area in a wide coverage and low power mode; or when the traffic volume carried by the network device is greater than a threshold, the network device may provide a network service with good signal quality in a small signal coverage area in a low coverage and high power mode.

In the foregoing implementation process, the network device usually determines the traffic volume by using an amount of data transmitted by a terminal device in a radio resource control (radio resource control, RRC) connected state (RRC_CONNECTED) (or referred to as an active state).

However, in a signal coverage area of the network device, in addition to a terminal device in an RRC connected mode having a communication requirement, another terminal device may also have a communication requirement. For example, the another terminal device may include a terminal device in an RRC idle state (RRC_IDLE) and/or a terminal device in an RRC inactive state (RRC _INACTIVE). Consequently, the traffic volume determined by the network device in the foregoing manner does not match a terminal device in the signal coverage area of the network device, thereby affecting network scheduling of the network device.

To resolve the foregoing problem, this application provides a communication method and a related device. The following provides detailed descriptions with reference to the accompanying drawings.

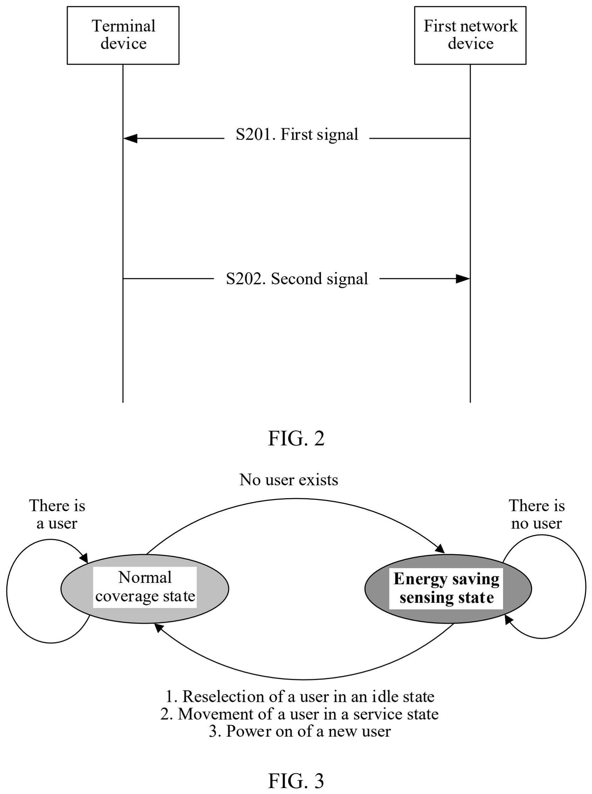

FIG. 2 is a diagram of a communication method according to this application. The method includes the following steps.

It should be noted that in FIG. 2, the method is illustrated by using an example in which a terminal device and a first network device are used as execution bodies of the interaction illustration. However, the execution bodies of the interaction illustration are not limited in this application. For example, in FIG. 2 and a corresponding implementation, S201 and S202 are performed by the terminal device, or may be performed by a chip, a chip system, or a processor that supports the terminal device in implementing the method, or may be a logical module or software that can implement all or some functions of the terminal device. In FIG. 2 and the corresponding implementation, the first network device in S201 and S202 may alternatively be replaced with a chip, a chip system, or a processor that supports the first network device in implementing the method, or may be replaced with a logical module or software that can implement all or some functions of the first network device. For example, the first network device may be an RU, a DU, a combination of an RU and a DU, or a combination of an RU, a DU, and a CU. For another example, the first network device may be a BBU, an RRU, an RRH, or an AAU.

S201. The first network device sends a first signal, and correspondingly, the terminal device receives the first signal, where the first signal is used to sense a terminal device.

In a possible implementation, that the first signal is used to sense the terminal device may be understood as that the first signal is used to sense whether a terminal device exists in a coverage area of the first network device. The coverage area of the first network device may be replaced with a coverage area of the first network device for receiving a signal and/or sending a signal, a cellular network range of the first network device, a communication reachable range of the first network device, or another description.

In a possible implementation, that the first signal is used to sense the terminal device may be replaced with that the first signal is used to probe (or identify, detect, determine, search, or the like) whether a terminal device exists.

In a possible implementation, the first signal of the first network device is the same as a first signal of a second network device. Specifically, the first network device and the second network device may send the same first signal. The first signal sent by the first network device is used to sense whether a terminal device exists in the coverage area of the first network device, and the first signal sent by the second network device is used to sense whether a terminal device exists in a coverage area of the second network device. Therefore, different network devices may reuse a same first signal to sense a terminal device in respective coverage areas, thereby simplifying implementation complexity of the network devices. When receiving the first signal, the terminal device may not need to determine whether the first signal is from the first network device or the second network device.

In a conventional interaction process based on a synchronization signal and PBCH block (synchronization signal/physical broadcast channel block, SS/PBCH block, SS/PBCH block, or SSB) and a random access preamble (preamble), when the network device sends an SSB to the terminal device, an identifier (for example, a physical cell identifier (physical cell identifier, PCI)) of the network device needs to be carried in the SSB, to distinguish between different network devices. However, in the foregoing technical solution, a plurality of different network devices (for example, two, three, four, or more network devices, or all network devices in a range (for example, a tracking area code (tracking area code, TAC) area, a public land mobile network (public land mobile network, PLMN), or an area)) may sense terminal devices in respective coverage areas by using a same first signal, and an identifier of the network device may not need to be carried. This can reduce overheads, and reduce implementation complexity of the network device and parsing complexity of the terminal device, so that the network device can quickly perceive the terminal device based on the first signal.

It should be understood that the first network device and the second network device may be different network devices, and the different network devices may be replaced with different base stations (or macro base stations, micro base stations, pico base stations, femto base stations, or the like), network devices in different cells (or micro cells, macro cells, cellular cells, micro cellular cells, macro cellular cells, or the like), network devices of different operators, different network devices in a same group of a same operator (for example, the network devices in the same group of the same operator may sense terminal devices by using a same first signal, and network devices in different groups of a same operator may sense terminal devices by using different signals), or another description. The network devices in the different cells may be the same, for example, the different cells are different cells managed by a same network device; or the network devices in the different cells may be different, for example, the different cells are different cells managed by different network devices. The network devices of the different operators may be the same, for example, the different operators may share a network device; or the network devices of the different operators may be different, for example, the different operators may perform standalone networking, that is, the different operators use respective network devices.

In this application, "receiving by the network device" may be understood as that a destination end of received information is the network device, and may include directly or indirectly receiving information; "receiving by the terminal device" may be understood as that a destination end of received information is the terminal device, and may include directly or indirectly receiving information; "sending by the network device" may be understood as that a source end of sent information is the network device, and may include directly or indirectly sending information; and "sending by the terminal device" may be understood as that a source end of sent information is the terminal device, and may include directly or indirectly sending information. Information may be forwarded between the source end and the destination end for information sending, for example, directly forwarded (or referred to as transparently transmitted) or forwarded after processing, for example, forwarded after a format change, but the destination end can understand valid information from the source end. A similar expression in this application may be understood similarly. Details are not described herein again.

S202. The terminal device sends a second signal, and correspondingly, the first network device receives the second signal, where the second signal is used to respond to the first signal.

According to the technical solution shown in FIG. 2, the first signal sent by the first network device in step S201 is used to sense the terminal device. Then, after the terminal device receives the first signal, the terminal device may send, in step S202, the second signal used to respond to the first signal, so that after receiving the second signal, the first network device can sense, based on the second signal, that a terminal device exists in a coverage area of the first network device. In this way, the first network device can quickly sense the terminal device in the coverage area of the first network device through interaction with the first signal, so that the first network device or a network management device of the first network device can subsequently perform network scheduling based on a sensing result, to improve communication efficiency.

For example, the first network device performs network scheduling based on the sensing result. A network scheduling result may be obtained by the network device through calculation by using a corresponding network scheduling algorithm, or may be obtained through inference by using an artificial intelligence model such as machine learning. This is not limited.

For example, the network management device of the first network device performs network scheduling based on the sensing result. The first network device may report the sensing result to the network management device, and the network management device notifies/configures the network scheduling result to the network device. The network scheduling result may be obtained by the network management device through calculation by using a corresponding network scheduling algorithm, or may be obtained through inference by using an artificial intelligence model such as machine learning. This is not limited.

In addition, compared with an implementation of performing network scheduling based on an amount of data transmitted by a terminal device in an RRC connected state, the foregoing technical solution can quickly sense a terminal device in the coverage area of the first network device, thereby avoiding impact caused by mismatch between a traffic volume determined by the first network device and a terminal device in a signal coverage area of the first network device, and optimizing network scheduling.

In the technical solution shown in FIG. 2, the first signal sent by the first network device in step S201 may be implemented in a plurality of manners. The following provides descriptions with reference to some implementation examples.

Implementation 1: A signal sequence carried by the first signal sent by the first network device in step S201 is preconfigured.

In Implementation 1, the signal sequence carried by the first signal used to sense the terminal device is preconfigured, so that the network device can send the first signal by using the preconfigured signal sequence, thereby reducing implementation complexity of the network device. In addition, the terminal device may parse (or identify, determine, or the like) a meaning of the first signal in a preconfiguration manner, so that implementation complexity of the terminal device can also be reduced.

In a possible implementation of Implementation 1, after the first network device sends the first signal in step S201, and before the first network device receives the second signal in step S202, the first network device determines not to send an SSB, where the second signal is used to respond to the first signal; and/or after the first network device receives N second signals in step S202, the first network device sends the SSB, where N is a positive integer. Therefore, before the first network device receives the second signal used to respond to the first signal, the first network device determines not to send the SSB, that is, before sensing the terminal device, the first network device may not send the SSB, thereby reducing power consumption. After the first network device receives the N (for example, one, two, or more) second signals, the first network device sends the SSB. In other words, after sensing the terminal device based on the second signal, the first network device may send the SSB, so that the terminal device can access the first network device based on the SSB and obtain a network service. The SSB may be further replaced with at least one of the following: a primary synchronization signal (primary synchronization signal, PSS), a secondary synchronization signal (secondary synchronization signal, SSS), or a physical broadcast channel (physical broadcast channel, PBCH).

In a possible implementation of Implementation 1, before the first network device receives the second signal, the first network device is in a first mode; and after the first network device receives the second signal, the first network device is updated (or switches) from the first mode to a second mode, where power consumption of the first mode is lower than power consumption of the second mode. Specifically, before the first network device receives the second signal, when the first network device is in the first mode, the network device may send the first signal that carries a preconfigured signal sequence. After the network device receives the second signal, the network device may be updated from the first mode to the second mode, where the power consumption of the first mode is lower than the power consumption of the second mode. In other words, this implementation can be applied to an energy saving scenario of the first network device, so that the network device can sense the terminal device in a low power consumption mode, and can quickly and accurately switch to a normal power consumption mode after sensing the terminal device based on the second signal, to provide a network service.

In a possible implementation, in Implementation 1, the network device is in the first mode (that is, an energy saving sensing state), and interaction between the first signal and the second signal may trigger the network device to be updated from the first mode to the second mode (for example, a normal coverage state). To be specific, the first signal is mainly used for downlink sensing, and the second signal is mainly used to activate the network device. Therefore, the first signal may be referred to as a downlink sensing beacon, and the second signal may be referred to as an uplink activation beacon.

In a possible implementation of Implementation 1, when the first network device is in the first mode, the method further includes: The first network device determines not to send one or more of the following: an SSB, information carried by a physical downlink control channel (physical downlink control channel, PDCCH), information carried by a physical downlink shared channel (physical downlink shared channel, PDSCH), a demodulation reference signal (demodulation reference signal, DMRS), or a channel state information-reference signal (channel state information reference signal, CSI-RS); and/or the first network device determines not to receive one or more of the following: information carried by a physical random access channel (physical random access channel, PRACH), information carried by a physical uplink control channel (physical uplink control channel, PUCCH), information carried by a physical uplink shared channel (physical uplink shared channel, PUSCH), a DMRS, and a sounding reference signal (sounding reference signal, SRS). Therefore, when the first network device is in the first mode (that is, a low power consumption mode), the first network device may sense the terminal device by using the first signal, and the first network device may not send or receive one or more of the foregoing, so that overheads can be reduced.

In a possible implementation of Implementation 1, the second mode is a normal coverage state. In the normal coverage state, the network device may send one or more of the following to the terminal device: an SSB, information carried by a PDCCH, information carried by a PDSCH, a DMRS, or a CSI-RS; and/or the terminal device may send one or more of the following to the network device: information carried by a PRACH, information carried by a PUCCH, information carried by a PUSCH, a DMRS, or an SRS.

In a possible implementation of Implementation 1, the second mode is another operating mode, for example, an operating mode in which power consumption is higher than that of the first mode but is lower than that of the normal coverage state. For example, compared with the normal coverage state, in the second mode, data transmission on some time domain symbols may be disabled, data transmission on some carriers may be disabled, and/or data transmission on some radio frequency channels may be disabled. This is not limited.

It may be understood that, different from the foregoing technical solution, in a possible implementation, timing shutdown is used, that is, the network device is completely shut down in a specified time period (for example, in the early morning). This brings a large energy saving benefit, but completely sacrifices network coverage. When a user exists, the network cannot be woken up, and user experience is poor. In another possible implementation, some channels or signals are shut down (for example, the PSS and/or the SSS in the SSB are/is not sent). The network device still needs to keep sending the PBCH in the SSB and receiving the random access preamble, to support wake-up of the network device through interaction between the SSB and the random access preamble. Because the PBCH in the SSB and the random access preamble need to carry much information, this energy saving effect is limited. However, in the foregoing technical solution, the terminal device in the coverage area of the network device can be sensed through interaction between the first signal and the second signal, and the network device may not need to receive or send one or more of the foregoing. This can greatly improve an energy saving effect of the network device, and avoid impact on user experience as much as possible by quickly sensing the terminal device.

In a possible implementation of Implementation 1, the first signal sent by the first network device in step S201 satisfies at least one of the following:
the first signal is used for time synchronization and/or frequency synchronization;
the first signal is a periodic signal;
the first signal does not carry cell identifier (identifier, ID) information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

Specifically, the first signal satisfies at least one of the foregoing items, to provide a plurality of implementations of the first signal, and a corresponding gain can be obtained in the foregoing implementation. The following provides some examples for description.

For example, when the first signal is used for time synchronization and/or frequency synchronization, the terminal device can determine, based on the first signal, a location of a time unit and/or a frequency domain unit that carry/carries the second signal, and the first network device can receive the second signal at a corresponding time unit and/or frequency domain unit location, thereby avoiding overheads caused by blind detection. That the first signal is used for time synchronization and/or frequency synchronization may also be described as follows: The first signal is used to carry time synchronization information and/or frequency synchronization information. The time unit may be a symbol, a slot, a mini-slot, a subframe, or the like, and the frequency domain unit may be a frequency raster, a channel raster, a subcarrier, a resource block (resource block, RB), or the like. For example, the first signal is a signal transmitted on a time-frequency resource, and a granularity of the time-frequency resource in time domain is a symbol and a granularity of the time-frequency resource in frequency domain is a subcarrier. The terminal device can determine a symbol location (for example, a symbol boundary) and a subcarrier location (for example, a subcarrier center frequency) in a system based on a location of the time-frequency resource that carries the first signal.

For another example, when the first signal is a periodic signal, compared with a manner of aperiodic sensing (for example, a burst signal), a success rate of sensing the terminal device by the network device can be improved.

For another example, when the first signal does not carry at least one of cell identifier information/system information/broadcast message/PSS/SSS/MIB/SIB 1 to SIB 19/paging message, implementation complexity of the first signal can be simplified as much as possible, power consumption of parsing the first signal by the terminal device can be reduced, and the terminal device can also be quickly sensed based on the first signal.

For another example, when an association relationship between the first signal and the SSB satisfies the foregoing implementation, some features of the SSB can be reused, so that a coverage area implemented by the network device by using the SSB is the same as or similar to a coverage area implemented by the network device by using the first signal, and a terminal device in the coverage area of the network device can be sensed by using the first signal, and can also access a network by using the SSB.

For another example, when the signal sequence carried by the first signal is orthogonal to the signal sequence carried by the second signal, when some terminal devices have sent the second signal based on the first signal, and there are both the first signal and the second signal in space, another terminal device or network device can accurately identify the first signal and the second signal based on the orthogonal signal sequences, thereby avoiding signal misdetection (or misjudgment).

In a possible implementation, the PSS and/or the SSS may be used to carry one or more of a physical cell identity (physical cell identifier, PCI), timing synchronization, frequency synchronization, radio frame timing, subframe timing, a cyclic prefix (cyclic prefix, CP) format, and a duplex format.

In a possible implementation, any one of the foregoing thresholds may be 0, may be another preconfigured value, or may be configured by the network device. This is not limited herein. Different thresholds are set independently, or different thresholds may have an association relationship. This is not limited.

In a possible implementation of Implementation 1, the second signal sent by the terminal device in step S202 satisfies at least one of the following:
a signal sequence carried by the second signal is preconfigured;
the second signal does not carry a random access preamble;
a frequency domain resource carrying the second signal is partially or completely the same as a frequency domain resource carrying the first signal, or a deviation between a location (for example, a start location, a middle location, an end location, or any other location) of a frequency domain resource of the second signal and a location (for example, a start location, a middle location, an end location, or any other location) of a frequency domain resource of the first signal is preconfigured;
a difference between a power spectral density of the second signal and a power spectral density of a random access preamble (or a PRACH) is less than or equal to a threshold;
a location of a time unit that carries the second signal is determined based on a random number; and
a deviation between a time domain location of the first signal and a time domain location of the second signal is preconfigured.

Specifically, the second signal satisfies at least one of the foregoing items, to provide a plurality of implementations of the second signal, and a corresponding gain can be obtained in the foregoing implementation. The following provides some examples for description.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal and the random access preamble meet the foregoing association relationship, implementation complexity can be reduced and power consumption can be reduced by reusing signal features of different signals.

For another example, when the location of the time unit that carries the second signal is determined based on the random number, a signaling storm generated when a plurality of terminal devices send the second signal at a same moment can be avoided as much as possible, to improve network robustness. In a possible implementation, the terminal device may generate a random number based on an implementation such as uniform random distribution or an inverse transform method. The random number indicates a time domain location of a time unit of the second signal. According to the method, a plurality of random numbers respectively generated by a plurality of terminal devices are evenly distributed in a range, and subsequently, the network device may receive (or detect, search for, or the like) second signals from one or more terminal devices in the range.

In a possible implementation example, when a location of a time unit that carries the second signal is determined based on a random number, a deviation between the location of the time unit of the second signal and a first moment is determined based on the random number, that is, the random number indicates the deviation between the location of the time unit of the second signal and the first moment. The first moment is associated with the first signal. For example, the first moment is a receiving moment of the first signal or a time unit in which the first signal is located, or the first moment is a timestamp carried in the first signal. In addition, for example, the random number is denoted as x. It indicates that the deviation between the time unit of the second signal and the first moment is x unit values. The unit values may be one or more symbols, one or more slots, one or more mini-slots, one or more subframes, y microseconds, y milliseconds, y seconds, or the like. Herein, y is a positive integer.

For another example, when the deviation between the time domain location of the first signal and the time domain location of the second signal is preconfigured, the terminal device sends the second signal at the preconfigured time domain location, and the network device receives the second signal at the preconfigured time domain location. This can reduce implementation complexity and improve a success rate of sensing the terminal device by the network device based on the second signal. The time domain location may be a start symbol location, an intermediate symbol location, an end symbol location, or another possible time unit location. This is not limited.

In a possible implementation, in Implementation 1, when the first network device is in a first mode, the first network device may send the first signal in step S201. That the first network device is in the first mode may also be understood as that the first network device is in an energy saving sensing state, that is, the network device in the energy saving sensing state can sense whether a user exists in the coverage area of the network device, including that a user moves into the coverage area or a new user powers on. It can be learned from the foregoing implementation process that a sensing function implemented by the network device in the energy saving sensing state may be extremely low power consumption, thereby greatly reducing power consumption. In addition, a sensing speed is fast enough, to respond to access and service requirements of the user in time.

In a possible implementation, after receiving the second signal in step S202, the first network device can be updated from the first mode to a second mode. For example, the first network device can be updated from the energy saving sensing state to a normal coverage state. That is, when the network device senses that a user in an idle state or an active state enters the coverage area of the network device, or a new user powers on, the network device is triggered to switch to the normal coverage state. Impact on user experience can be avoided as much as possible through fast state switching.

In an implementation example, as shown in FIG. 3, when the first network device is in the energy saving sensing state, the first network device may perform a process of sending the first signal in step S201.

In a possible implementation, when the first network device does not receive the second signal in step S202, the first network device determines that there is no terminal device (that is, there is no user as shown in FIG. 3) in a current coverage area. Therefore, the first network device may keep a current state unchanged, for example, the first network device does not need to switch from the energy saving sensing state to the normal coverage state, and keeping in a mode of the energy saving sensing state can reduce power consumption.

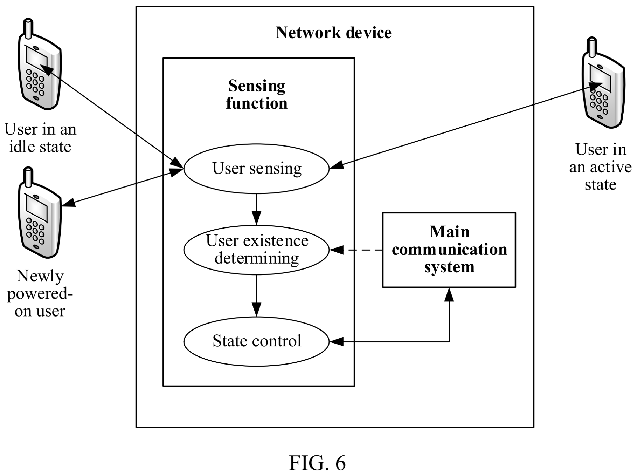

In a possible implementation, when the first network device receives the N (for example, one, two, or more) second signals in step S202, the first network device determines that a terminal device exists in a current coverage area (including that a user in an idle state is reselected into the coverage area, a user in an active state moves into the coverage area, a new user powers on, and the like shown in FIG. 6). Therefore, the first network device may switch from the energy saving sensing state to the normal coverage state, and provide a network service for the terminal device in the normal coverage state.

Implementation 2: The first signal sent by the first network device in step S201 carries first indication information, the first indication information is used to trigger (or request) the second signal, and the second signal is used to respond to the first signal.

In Implementation 2, when the first signal carries the first indication information, after receiving the first signal in step S201, the terminal device may trigger, based on the first indication information in the first signal, sending of the second signal in step S202.

In an implementation example, the first indication information may be a field carried in the first signal. When a value of the field is a first value, a meaning of the field is the same as a meaning of the first indication information. When a value of the field is a second value, a meaning of the field is different from a meaning of the first indication information (for example, indicating not to trigger the second signal). In a possible implementation, the first value is 1 and the second value is 0, or the first value is 0 and the second value is 1. For example, when a value of a related field carried in the first signal received by the terminal device is 1, the terminal device sends the second signal; or when a value of a related field carried in the first signal received by the terminal device is 0, the terminal device does not send the second signal.

In another implementation example, the first indication information may be an optional field carried in the first signal. When the first signal carries the optional field, a meaning of the optional field is the same as a meaning of the first indication information. When the first signal does not carry the optional field, it is considered that the first signal does not carry the first indication information, or it indicates not to trigger the second signal. For example, when the first signal received by the terminal device carries a related field, the terminal device sends the second signal; or when the first signal received by the terminal device does not carry a related field, the terminal device does not send the second signal.

In a possible implementation, the first indication information may be used to trigger a terminal device in an RRC connected state, a terminal device in an RRC inactive state, and a terminal device in an RRC idle state to send the second signal, so as to sense various terminal devices.

In a possible implementation, the first indication information may be used to trigger a terminal device in an RRC idle state and/or a terminal device in an RRC inactive state to send the second signal. The network device can determine, based on data transmitted by the network device, whether a terminal device in an RRC connected state exists. Therefore, the terminal device in the RRC connected state may not need to send the second signal based on the first indication information, and the terminal device in the RRC idle state and/or the terminal device in the RRC inactive state may send the second signal to the network device based on the first indication information, so that the network device can sense various terminal devices.

In a possible implementation, when the first signal carries the first indication information, the first signal may be an SSB, a MIB, or another broadcast signal, for example, any one of a SIB 1 to a SIB 19.

In a possible implementation of Implementation 2, after the first network device sends the first signal, the method further includes: After the first network device receives a second signal, the first network device sends an SSB, where the second signal is used to respond to the first signal; and/or after the first network device determines that the second signal is not received, determines not to send the SSB. Specifically, after the first network device receives the second signal used to respond to the first signal, the first network device sends the SSB, that is, after sensing the terminal device based on the second signal, the first network device may send the SSB, so that the terminal device can access the first network device based on the SSB and obtain a network service. After the first network device determines that the second signal is not received, the first network device determines not to send the SSB. In other words, before sensing the terminal device, the first network device may not send the SSB, so that power consumption can be reduced.

In a possible implementation, the first signal is a periodic signal. When the first signal is a periodic signal, that the first network device determines that the second signal is not received may include: The first network device determines that the second signal is not received in duration in which the first signal in M (M is a positive integer) periodicities is continuously sent. Similarly, that the first network device receives the second signal may include: The first network device determines that one or more second signals are received in duration in which the first signal in M (M is a positive integer) periodicities is continuously sent. Further, in a possible implementation, a value of N is the same as that of M, or a value of N is different from that of M.

In a possible implementation, that the first network device determines that the second signal is not received may include: The first network device does not receive the second signal in preset duration (or a time window) after a sending moment of a first signal. Similarly, that the first network device receives the second signal may include: The first network device determines, in preset duration after a sending moment of a first signal, that one or more second signals are received.

In a possible implementation of Implementation 2, before the first network device receives the second signal in step S202, the first network device is in a second mode; and after the first network device determines that the second signal is not received in step S202, the first network device is updated from the first mode to a first mode, where power consumption of the first mode is lower than power consumption of the second mode. Specifically, before the first network device receives the second signal, when the first network device is in the second mode, the first network device may send the first signal that carries the first indication information. After the network device determines that the second signal is not received, the network device may be updated from the second mode to the first mode, where the power consumption of the first mode is lower than the power consumption of the second mode. In other words, in the foregoing technical solution, the network device can sense the terminal device in a high power consumption mode, and in particular, can sense a terminal device in an RRC idle state and a terminal device in an RRC inactive state; and can quickly and accurately switch to a low power consumption mode after determining that the second signal is not received, that is, determining that the terminal device is not sensed, to reduce power consumption of the network device.

For descriptions of the first mode and the second mode, refer to the related descriptions in Implementation 1. Details are not described herein again.

In a possible implementation, in Implementation 2, the network device is in the second mode (for example, a normal coverage state), and interaction between the first signal and the second signal may trigger the network device to be updated from the second mode to the first mode (that is, an energy saving sensing state). To be specific, the first signal is mainly used to sense a terminal device and trigger reporting of the terminal device, and the second signal is mainly used to continuously activate the network device. Therefore, the first indication information carried in the first signal may be referred to as a sensing reporting indication, and the second signal may be referred to as an uplink activation beacon.

In a possible implementation of Implementation 2, the second signal sent by the terminal device in step S202 satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold, where the center frequency may be alternatively replaced with another frequency domain location like a start frequency, a start resource location (resource block, RB), an end frequency, or an end RB;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

Specifically, the second signal satisfies at least one of the foregoing items, to provide a plurality of implementations of the second signal, and a corresponding gain can be obtained in the foregoing implementation. The following provides some examples for description.

For example, when the signal sequence carried by the second signal is preconfigured or the second signal does not carry a random access preamble, implementation complexity of the terminal device can be reduced, so that the terminal device can quickly feed back the second signal after receiving the first signal, to reduce a delay of obtaining a network service by the terminal device subsequently through interaction between the SSB and the random access preamble.

For another example, when the second signal is carried on a PRACH, a design of the PRACH may be reused, so that a system design can be simplified.

For another example, when the second signal and the random access preamble meet the foregoing association relationship, implementation complexity can be reduced and power consumption can be reduced by reusing signal features of different signals.

In addition, for an implementation process in which the location of the time unit that carries the second signal is determined based on the random number, and an implementation process in which the deviation between the time domain location of the first signal and the time domain location of the second signal is preconfigured, refer to the related descriptions in Implementation 1.

In a possible implementation, in Implementation 2, when the first network device is in the second mode, the first network device may send the first signal in step S201. For example, that the first network device is in the second mode may also be understood as that the first network device is in a normal coverage state. In a current protocol, a user in an idle state (usually dozens of base stations) is paged based on a location area, and whether a user in an idle state and/or a user in an inactive state exist/exists in a single base station cannot be sensed. Therefore, a function of sensing the user in the idle state and/or the user in the inactive state can be implemented in the foregoing implementation process.

In a possible implementation, to reduce unnecessary user sensing overheads as much as possible, when a terminal device in an RRC connected state (that is, a user in an active state) exists in a coverage area of the network device, the terminal device in the RRC connected state does not need to be sensed. For example, the first signal is a MIB or a system message, the terminal device in the RRC connected state may not send the second signal to the network device, and the terminal device in the RRC idle state and/or the terminal device in the RRC inactive state may send the second signal to the network device.

In a possible implementation, when neither a user in an active state nor a user in an idle state exists in a continuous period of time, a base station is triggered to enter an energy saving sensing state. Determining time for entering the energy saving sensing state needs to be short enough to reduce energy consumption of the base station.

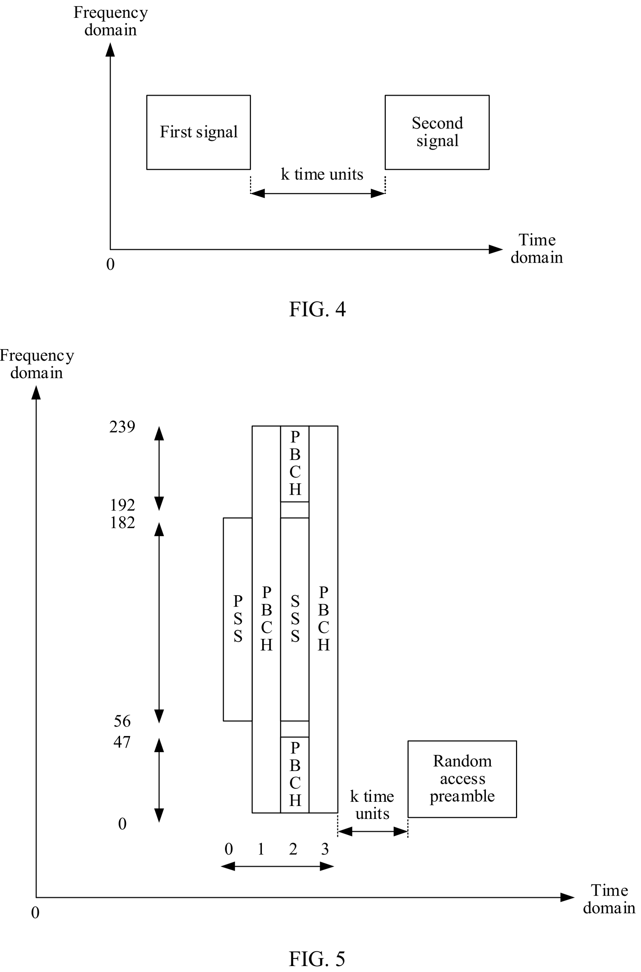

In an implementation example, the first signal and the second signal in Implementation 1 and the first signal and the second signal in Implementation 2 may be implemented by using examples shown in FIG. 4 and FIG. 5 respectively.

In an implementation example shown in FIG. 4, in Implementation 1, when the first signal carries a preconfigured sequence, a frequency domain resource occupied by the second signal may be partially or completely the same as a frequency domain resource occupied by the first signal. In this way, implementation complexity of the terminal device and the network device can be reduced and power consumption can be reduced by reusing signal features of different signals.

For example, in FIG. 4, the first signal occupies a1 symbols in time domain, and occupies b1 resource blocks (resource bolck, RB) in frequency domain; and the second signal occupies a2 symbols in time domain, and occupies b2 RBs in frequency domain. Herein, al, b1, a2, and b2 are all positive numbers. For example, values of a1 and a2 are any one of 1 to 10 (for example, a value of a1 may be 4, and a value of a2 may be 4 or 6), and values of b1 and b2 are any one of 1 to 5 (for example, a value of b1 may be 3, and a value of b2 is 3, 4, or 6).

As shown in an implementation example in FIG. 5, in Implementation 2, when the first signal carries the first indication information, the first signal may be an SSB. The SSB may include a PSS that occupies a subcarrier #56 to a subcarrier #182 in frequency domain and occupies a symbol #0 in time domain, an SSS that occupies a subcarrier #56 to a subcarrier #182 in frequency domain and occupies a symbol #2 in time domain, a PBCH signal that occupies a subcarrier #0 to a subcarrier #239 in frequency domain and occupies a symbol #1 and a symbol #3 in time domain, and a PBCH signal that occupies a subcarrier #0 to a subcarrier #47 and a subcarrier #192 to a subcarrier #239 in frequency domain and occupies a symbol #2 in time domain that are shown in the figure. The first indication information may be carried in one or more of a PSS, an SSS, or a PBCH signal.

In a possible implementation, for Implementation 1 and Implementation 2, a time-frequency domain resource of the second signal may be partially or completely the same as a time-frequency domain resource of the random access preamble. In this way, implementation complexity of the terminal device and the network device can be reduced and power consumption can be reduced by reusing signal features of different signals.

In a possible implementation, in the implementation examples shown in FIG. 4 and FIG. 5, a deviation between a time domain location of the first signal and a time domain location of the second signal may be preconfigured. For example, the deviation may be represented as k time units shown in FIG. 4 or FIG. 5.

In conclusion, for Implementation 1 and Implementation 2, to reduce, as much as possible, sensing energy consumption implemented based on the first signal and the second signal, the first signal and the second signal may satisfy one or more of the following:

In some implementations, if broadcast and paging need to be supported, the network device may periodically start sending of the first signal. In addition, greatly simplifying functions of (or amounts of information carried by) the first signal and the second signal, for example, periodically sending the first signal with a fixed signal sequence can prevent a communication function from being frequently enabled, so that the network device can keep in an energy saving sensing state for a long time, thereby reducing power consumption of the network device.

In some implementations, to ensure that the first signal has a same coverage area as a cell, a power spectral density of the first signal may be consistent with a power spectral density of an SSB transmitted on a normal broadcast channel. Therefore, a bandwidth of a sensing beacon may need to be greatly reduced to reduce transmit power.

In some implementations, both the first signal and the second signal use a fixed signal sequence, and may not carry another uplink/downlink message.

In some implementations, the first signal and the second signal use a frequency that is the same as or close to a frequency of the SSB, so that after detecting the first signal, the terminal device can obtain the frequency of the SSB at the same time.

In some implementations, it needs to be ensured that signal sequences used by the first signal and the second signal are orthogonal to each other, to prevent a second signal sent by a terminal device from being incorrectly determined as the first signal by another terminal device.

In an implementation example of Implementation 1, as shown in FIG. 3, when the first network device is in an energy saving sensing state (that is, a first mode), the first network device may perform a process of sending the first signal in step S201.

For example, when the first network device does not receive the second signal in step S202, the first network device determines that there is no terminal device (that is, there is no user as shown in FIG. 3) in a current coverage area. Therefore, the first network device may keep a current state unchanged, and keep in a low power consumption mode in an energy saving sensing state, to reduce energy consumption.

For another example, when the first network device receives the N second signals in step S202, the first network device determines that a terminal device exists in a current coverage area (including but not limited to that a user in an idle state is reselected into the coverage area, a user in an active state is handed over to the coverage area, a new user powers on, and the like as shown in FIG. 3). Therefore, the first network device may be updated from the energy saving sensing state to the normal coverage state, and provide a network service for the terminal device in the normal coverage state.

In an implementation example of Implementation 2, as shown in FIG. 3, when the first network device is in a normal coverage state (that is, the second mode), the first network device may perform a process of sending the first signal in step S201.

In a possible implementation, for example, when the first network device does not receive the second signal in step S202, the first network device determines that there is no terminal device (that is, no user exists as shown in FIG. 3) in a current coverage area. Therefore, the first network device may be updated from the normal coverage state to the energy saving sensing state, and keep in a low power consumption mode in the energy saving sensing state, to reduce energy consumption.

In a possible implementation, for another example, when the first network device receives the N second signals in step S202, the first network device determines that there is a terminal device (that is, there is a user as shown in FIG. 3) in a current coverage area. Therefore, the first network device may keep a current state unchanged, that is, the first network device does not need to be updated from the normal coverage state to the energy saving sensing state, to continuously provide a network service for the terminal device.

In another implementation example, implementation processes involved in Implementation 1 and Implementation 2 may be implemented by using a use case diagram shown in FIG. 6. As shown in FIG. 6, the use case diagram includes the following implementation process.

Participants: a user in an idle state, a user in an active state, and a newly powered-on user.

Functions: user sensing, user existence determining, and state control.

Interaction (association): The network device may include a main communication system and a sensing function module. The sensing function module is configured to: implement user sensing through interaction between the first signal and the second signal, and control enabling or disabling of the main communication system based on a user sensing result. The main communication system is configured to exchange another signal with the terminal device, for example, an SSB, information carried by a PDCCH, information carried by a PDSCH, a DMRS, a CSI-RS, information carried by a PRACH, information carried by a PUCCH, information carried by a PUSCH, or an SRS. For example, the main communication system may be configured to: send an SSB and receive a random access preamble, to implement a random access process of the terminal device.

It should be noted that the network device may include one or more sensing function modules.

For example, when the network device includes one sensing function module, the network device uses the sensing function module to implement interaction between the first signal and the second signal in both the first mode and the second mode. In a possible implementation, the sensing function module and the main communication system may be independent modules (implementations shown in FIG. 6, and FIG. 7 and FIG. 8 below), or the sensing function module may be integrated into the main communication system. This is not limited herein.

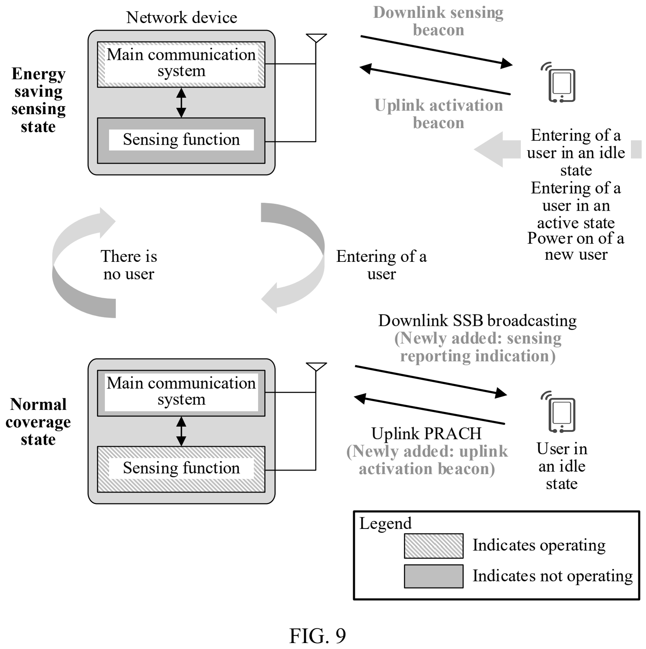

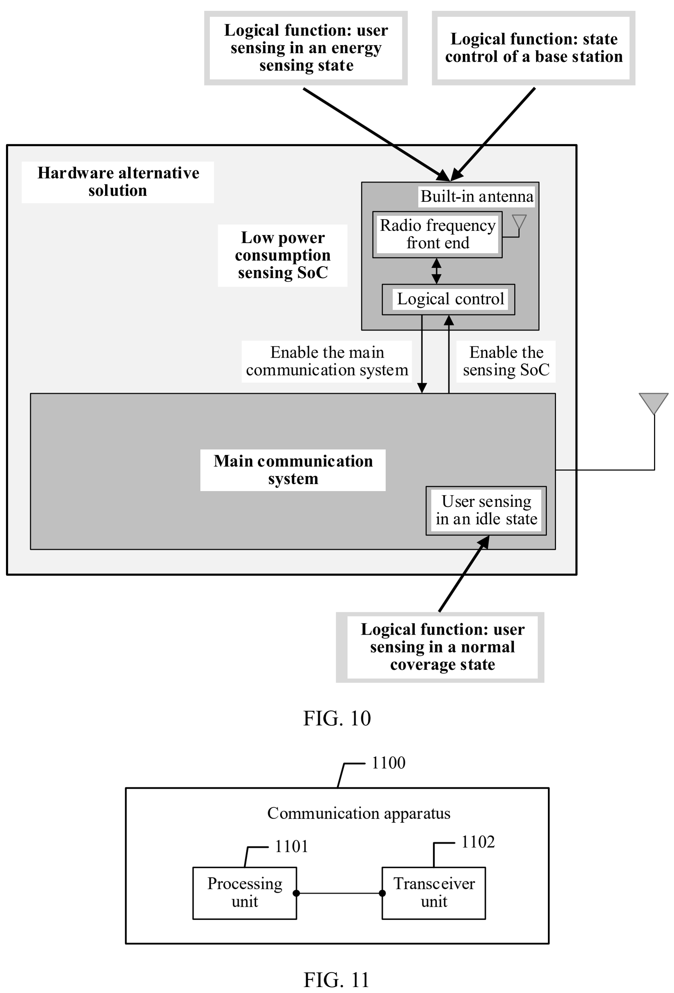

For another example, when the network device includes at least two sensing function modules (for example, the at least two sensing function modules include a first sensing function module and a second sensing function module), the network device separately uses the first sensing function module and the second sensing function module to implement interaction between the first signal and the second signal in the first mode and the second mode. In a possible implementation, the second sensing function module may be integrated into the main communication system (for example, implementations shown in FIG. 9 and FIG. 10 below), or both the first sensing function module and the second sensing function module may be integrated into the main communication system. This is not limited herein.

When the example shown in FIG. 6 is applied to Implementation 1, the network device is in the first mode (for example, the energy saving sensing state shown in FIG. 3), that is, the main communication system in the network device is disabled and the sensing function module is enabled. The sensing function module senses the terminal device through an interaction process between the first signal in step S201 and the second signal in step S202. For example, after implementing user sensing in a process of sending the first signal and receiving the second signal, the sensing function module may perform user existence determining based on a user sensing result (including but not limited to reselection of a user in an idle state, handover of a user in an active state, power on of a new user, and the like), and perform state control when determining that a user exists. For example, when the network device determines, in the first mode through user sensing, that a user exists, the state control is used to trigger enabling of the main communication system and trigger disabling of the sensing function module, so that the main communication system provides a network service for the terminal device. For another example, when the network device determines, in the first mode through user sensing, that no user exists, the state control is used to keep the sensing function module enabled without triggering enabling of the main communication system, so that the main communication system is in a disabled state, to reduce power consumption.

Therefore, based on the implementation example shown in FIG. 6, when the network device is in the energy saving sensing state, after sensing that a terminal device exists in a coverage area of the network device, the network device may switch from the energy saving sensing state to the normal coverage state, and provide a network service for the terminal device in the normal coverage state. After sensing that no terminal device exists in a coverage area of the network device, the network device may keep a current state unchanged, that is, the network device does not need to switch from the energy saving sensing state to the normal coverage state, and keeping in a mode of the energy saving sensing state can reduce power consumption.

When the example shown in FIG. 6 is applied to Implementation 2, the network device is in the second mode (for example, the normal coverage state shown in FIG. 3), that is, the main communication system in the network device is enabled and the sensing function module is enabled. The sensing function module senses the terminal device through an interaction process between the first signal in step S201 and the second signal in step S202. For example, when it is determined that a terminal device exists in the coverage area of the network device, the main communication system may keep in an enabled state, to provide a network service for the terminal device. For another example, when it is determined that no terminal device exists in the coverage area of the network device, the main communication system may be triggered to enter a disabled state, to reduce power consumption.

Therefore, based on the implementation example shown in FIG. 6, when the network device is in the normal coverage state, after sensing that a terminal device exists in the coverage area of the network device, the network device may keep a current state unchanged, that is, the network device does not need to be updated from the normal coverage state to the energy saving sensing state, to continuously provide a network service for the terminal device. After sensing that no terminal device exists in the coverage area of the network device, the network device may be updated from the normal coverage state to the energy saving sensing state, and keeping in a low power consumption mode in the energy saving sensing mode can reduce energy consumption.

In a possible implementation, in the implementation example shown in FIG. 6, the sensing function module in the network device may further obtain, from the main communication system, indication information indicating whether a user in an active state currently exists. When a terminal device in an RRC connected state (that is, a user in an active state) exists in a coverage area of the network device, the sensing function module may be disabled, that is, a terminal device in an RRC idle state (that is, a user in an idle state) does not need to be sensed, so that unnecessary user sensing overheads can be reduced.

In a possible implementation, based on the foregoing implementation process, when the sensing function module determines that state switching needs to be performed, state switching may be implemented by controlling enabling and disabling of the main communication system.

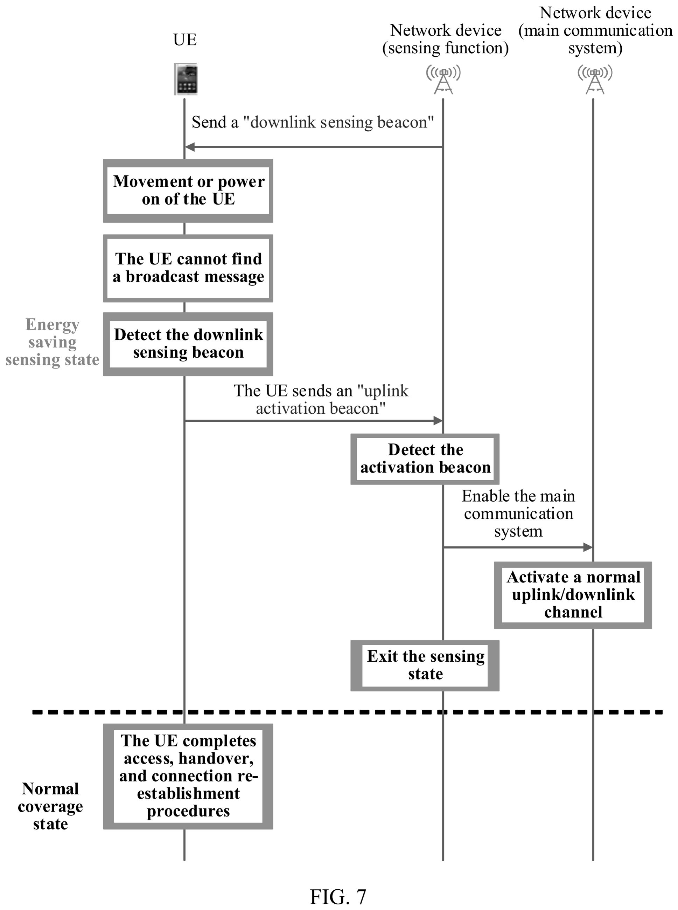

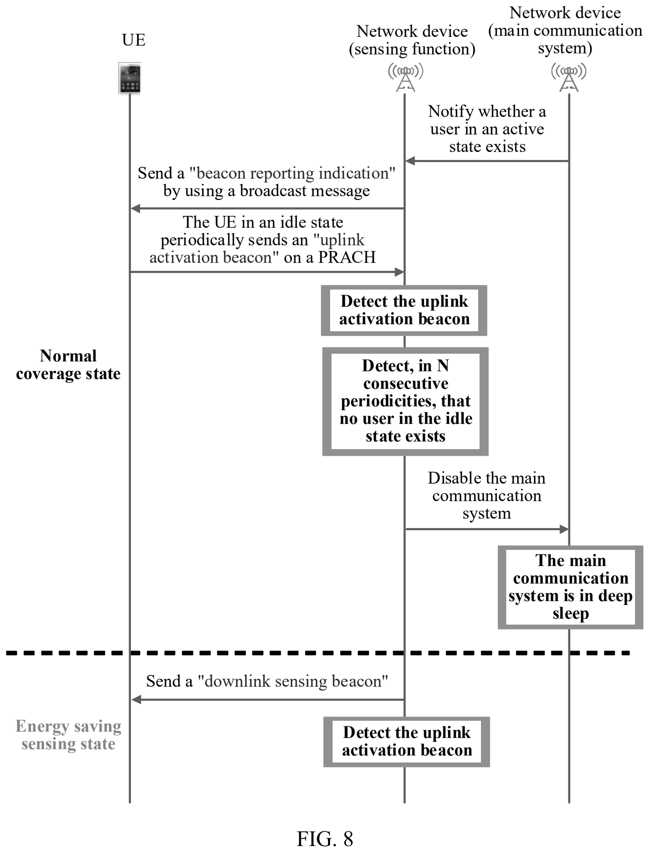

For ease of understanding, the following describes, by using the implementation examples shown in FIG. 7 and FIG. 8, the implementation processes in which the network device (for example, the network device includes the main communication system and the sensing function module shown in FIG. 6) separately performs Implementation 1 and Implementation 2. It should be understood that, in the following example, the terminal device is a UE.

The communication method shown in FIG. 7 is an implementation example of Implementation 1. The method includes the following steps.

In FIG. 7, a network device in an energy saving sensing state may disable the main communication system to reduce energy consumption, and enable the sensing function module.

In an implementation example of Implementation 1 in step S201, in the energy saving sensing state, the network device sends the first signal, which is denoted as a "downlink sensing beacon" in the figure.

Correspondingly, in an implementation example of Implementation 1 in step S202, the UE sends the second signal, which is denoted as an "uplink activation beacon" in the figure. The UE that sends the uplink activation beacon may include a UE that moves into a coverage area of the network device or a newly powered-on UE. When the UE cannot find a broadcast message and detects a downlink sensing beacon, the UE is triggered to send the "uplink activation beacon". In other words, the UE may activate the network device in two scenarios: (1) In a mobility scenario, when a user in an idle state or a user in a connected state enters, the network device supports fast start, that is, a start delay of the network device is low, to complete start of the network device within a delay of performing a reselection procedure or a handover procedure by the terminal device without affecting user experience. (2) In a UE power-on scenario, the UE sends an uplink activation beacon.

Then, after detecting the activation beacon, the sensing function module in the network device sends an instruction to the main communication system in the network device to enable the main communication system, so that the main communication system in the network device can activate a normal uplink/downlink channel to switch to the normal coverage state. Correspondingly, the sensing function module in the network device exits the sensing state. Subsequently, the UE may complete at least one of the following procedures in the normal coverage state: access, handover, connection re-establishment, and the like.

Based on the implementation process shown in FIG. 7, when no terminal device exists in the coverage area of the network device, the network device may switch to the "energy saving sensing state". In this state, the network device reserves a "downlink sensing beacon" with small bandwidth and low power consumption, and disables another downlink physical channel and signal, to reduce power consumption. In addition, when the UE enters the coverage area of the network device in the "energy saving sensing state", the UE actively detects the "downlink sensing beacon" when the UE cannot detect an SSB channel, and sends the "uplink activation beacon" after detecting the "downlink sensing beacon". After the network device detects the "uplink activation beacon", the network device is notified to start a service channel in time, so that the UE can normally receive an SSB and another broadcast signal, and complete a normal procedure such as access authentication.

The communication method shown in FIG. 8 is an implementation example of Implementation 2. The method includes the following steps.

In FIG. 8, a network device in a normal coverage state may enable the main communication system to support service transmission, and enable the sensing function module.

In an implementation example of Implementation 2 in step S201, in the normal coverage state, the main communication system in the network device may send a notification to the sensing function module in the network device, where the notification indicates whether a user in an active state (for example, a terminal device in an RRC connected state) exists in a coverage area of the network device. In addition, when the notification indicates that no user in an active state exists in a coverage area of the network device, the sensing function module in the network device sends, by using a broadcast message, the first signal that carries the first indication information, where the first indication information is denoted as a "beacon reporting indication" in the figure.

Correspondingly, in an implementation example of Implementation 1 in step S202, a UE in an idle state periodically sends the second signal on a PRACH, which is denoted as an "uplink activation beacon" in the figure.

Then, the sensing function module in the network device may continuously detect the uplink activation beacon. In addition, when the sensing function module in the network device detects, in N (N is a positive integer) consecutive periodicities, that no user in an idle state exists (that is, no uplink activation beacon is received in the N consecutive periodicities), the sensing function module in the network device sends an indication to the main communication system in the network device to disable the main communication system, so that the main communication system in the network device is in deep sleep, to reduce power consumption of the network device. Subsequently, in the energy saving sensing state, for an implementation process of the network device and the UE, refer to the implementation process shown in FIG. 7.

Based on the implementation process shown in FIG. 8, when no terminal device in an RRC connected state exists in a coverage area of the network device, the main communication system in the network device sends a notification to the sensing function module in the network device, so that the sensing function module in the network device sends a "beacon reporting indication", and the sensing function module in the network device senses whether a terminal device in an RRC idle state exists in the coverage area of the network device, and when determining that no terminal device in the RRC idle state exists, the sensing function module in the network device may indicate the main communication system in the network device to sleep deeply, to reduce power consumption of the network device.

In another implementation example, switching between the energy saving sensing state and the normal coverage state of the network device may be implemented by using an example shown in FIG. 9.

As shown in FIG. 9, in an implementation example of Implementation 1, in the network device in the energy saving sensing state, the main communication system in the network device does not operate, and the sensing function module in the network device operates. When sensing that a user enters, the network device may switch to the normal coverage state. In addition, the network device may sense, through interaction between a downlink sensing beacon (that is, an implementation example of the first signal) and an uplink activation beacon (that is, an implementation example of the second signal), whether entering of a user exists. In a possible implementation, entering of the user includes entering of a user in an idle state, entering of a user in an active state, power on of a new user, and the like.

As shown in FIG. 9, the downlink sensing beacon has one or more of the following features:
1. The downlink sensing beacon is to enable the UE to sense the coverage of the network device in the energy saving sensing state, that is, to enable the UE to know that the coverage area of the network device in the energy saving sensing state is entered. Therefore, coverage scenarios of the network device are increased from two types (normal coverage and no coverage) to three types (normal coverage, energy saving sensing coverage, and no coverage).
2. The network device periodically sends the downlink sensing beacon in the energy saving sensing state. In scenarios in which a user moves or a new user powers on, when the UE cannot find an SSB, detection of the downlink sensing beacon is started.
3. In a process of switching to the energy saving sensing state, the network device still keeps sending the downlink sensing beacon.
4. Functions of the downlink sensing beacon can be greatly simplified, and a broadcast message, a paging message, and the like do not need to be carried, provided that the UE can complete a synchronization function. Therefore, a fixed sequence that is sent periodically may be used. In a possible implementation, in addition to the synchronization function, the downlink sensing beacon may further have another function. This is not limited.

As shown in FIG. 9, the uplink activation beacon has one or more of the following features:
1. The uplink activation beacon is to indicate that the network device is activated, or to indicate that a terminal device exists in a coverage area of the network device. After receiving the uplink activation beacon, the network device may switch from the energy saving sensing state to the normal coverage state.
2. When the UE detects a downlink sensing beacon, the UE sends an activation beacon in an uplink, and then waits for a period of time and detects the downlink sensing beacon again. If the downlink sensing beacon is not detected, the UE starts to search for an SSB. Otherwise, the UE sends the uplink activation beacon again and repeats the process. In a possible implementation, a quantity of repetitions for repeatedly sending the uplink activation beacon by the terminal device may be restricted, for example, a maximum quantity of repetitions is restricted.
3. After correctly detecting the uplink activation beacon for N times, the network device exits the energy saving sensing state.
4. Functions of the uplink activated beacon can be greatly simplified, and users do not need to be distinguished, provided that detection can be performed to determine whether an uplink activated beacon exists. Therefore, a fixed sequence may be used. In a possible implementation, in addition to being detected, the uplink sensing beacon may further have another function. This is not limited.

As shown in FIG. 9, in an implementation example of Implementation 2, in the network device in the normal coverage state, the main communication system (the main communication system may sense a terminal device by using the first indication information carried in the first signal) in the network device operates, and the sensing function module in the network device does not operate. When determining that no user exists, the network device may switch to the energy saving sensing state. In addition, the network device may sense, through interaction between a sensing reporting indication (an implementation example of the first signal) and an uplink activation beacon (an implementation example of the second signal), whether entering of a user exists.

As shown in FIG. 9, the sensing reporting indication has one or more of the following features:
1. The sensing reporting indication is to indicate, by using a downlink broadcast message, whether a user in an idle state sends an uplink activation beacon, so that unnecessary uplink activation beacons can be reduced as much as possible (for example, a terminal device in an RRC connected state (that is, a user in an active state) cannot send an uplink activation beacon).
2. When a user in an active state exists, because the main communication system in the network device does not need to be disabled, the user in the idle state may not be sensed, and the UE is indicated, by using a broadcast message, not to send an uplink activation beacon.
3. When no UE in an active state exists, the UE is indicated, by using a broadcast message, to send an uplink activation beacon.

As shown in FIG. 9, the uplink activation beacon has one or more of the following features:
1. For the uplink activation beacon, the uplink activation beacon sent by a UE in an idle state may be a "heartbeat" signal, so that the network device senses that a user in an idle state exists in a coverage area of the network device.
2. A plurality of UEs in the idle state randomly select a sending slot by using a random number generation algorithm (for example, even random distribution or an inverse transform method), to avoid a signaling storm caused by synchronous reporting of all the UEs. In addition, after receiving N activation beacons, the network device may notify, by using a broadcast message, the UE to stop, without waiting for all the UEs in the idle state to complete sending. A UE in an active state does not need to perform sending.
3. A PRACH is reused, and a fixed sequence is used. The network device triggers state switching after detection.

It can be learned from the foregoing implementation example that, in a sensing-assisted energy saving mode, the network device is in a low power consumption operating state, transmit power in the low power consumption operating state is 15 dB to 20 dB lower than that in an active state, and power consumption in the energy saving mode is approximately ten times less than that in a normal mode, so that power consumption of a radio frequency module (such as an RRU, an AAU, or a pico remote radio unit (pico remote radio unit, pRRU)) can be effectively reduced. In addition, in the sensing-assisted energy saving mode, a UE that enters a cell can be effectively detected. Therefore, it can be ensured that the network device can be in the energy saving mode for a long time, thereby maximizing energy saving efficiency.

In a possible implementation, in implementation processes of Implementation 1 and Implementation 2, the first network device may send the first signal in a plurality of manners. The following provides descriptions by using some examples.

Manner 1: The first network device includes a first communication module and a second communication module, where the first signal is sent via the first communication module, and the SSB is sent via the second communication module. When the first network device separately sends the SSB and the first signal via different communication modules, the first network device may sleep/disable a communication module of the other signal in a process of sending one of the signals, so that energy consumption can be reduced.

Manner 2: The first network device includes a third communication module, the first signal is sent via the third communication module, and the third communication module is configured to: send or receive at least one of the following: an SSB (when the first signal is a signal other than an SSB, for example, any one of a SIB 1 to a SIB 19), information carried by a PDCCH, information carried by a PDSCH, a DMRS, a CSI-RS, information carried by a PRACH, information carried by a PUCCH, information carried by a PUSCH, and an SRS. When the first network device sends the first signal via the third communication module, implementation complexity can be reduced, and a communication module that reuses another signal can send the first signal.

It should be understood that in Manner 2, sending of the first signal and receiving of the second signal may be implemented via a same communication module in the first network device.

In a possible implementation, in Manner 1 or Manner 2, any communication module (for example, the first communication module, the second communication module, or the third communication module) may be a radio frequency signal processing module, for example, including an RRU, an RU, an AAU, an RRH, and a radio device (radio equipment, RE). In a possible implementation, the any communication module may be further a baseband signal processing module, for example, a BBU, a radio equipment controller (radio equipment controller, REC), or a distributed unit (distributed unit, DU).

In a possible implementation, in Manner 1 or Manner 2, the communication module configured to send the SSB may be further configured to: receive and send another signal. For example, the communication module may be further configured to send one or more of the following: information carried by a PDCCH, information carried by a PDSCH, a DMRS, a CSI-RS, and the like. For another example, the communication module may be further configured to receive one or more of the following: information carried by a PRACH, information carried by a PUCCH, information carried by a PUSCH, a DMRS, an SRS, and the like.

For ease of understanding, the following describes the foregoing implementation process with reference to more accompanying drawings by using Manner 1 as an example. It should be understood that, in the following example, the network device is a base station.

As shown in FIG. 10, an alternative hardware solution of a network device is shown in FIG. 10. The network device may include a main communication system and a low power consumption sensing system on chip (system on chip, SoC). The low power consumption sensing SoC is mainly responsible for sending a first signal and receiving a second signal when the network device is in a first mode (that is, an energy saving sensing state). The main communication system is mainly responsible for sending a first signal and receiving a second signal in a second mode (a normal coverage state).

It should be noted that, the low power consumption sensing SoC may be integrated into the main communication system, or the low power consumption sensing SoC and the main communication system may be modules that are independent of each other. This is not limited herein. In the example shown in FIG. 10, an example in which the low power consumption sensing SoC and the main communication system are modules that are independent of each other is used for description.

It may be understood that the main communication system may be the foregoing communication module configured to send the SSB. For example, the main communication system may be further configured to send one or more of the following: information carried by a PDCCH, information carried by a PDSCH, a DMRS, a CSI-RS, and the like. For another example, the main communication system may be further configured to receive one or more of the following: information carried by a PRACH, information carried by a PUCCH, information carried by a PUSCH, a DMRS, an SRS, and the like.

In FIG. 10, when the network device is in a first mode (that is, an energy saving sensing state), the sensing function in the network device is implemented by using independent hardware (that is, a low power consumption sensing SoC). When the network device is in a second mode (that is, a normal coverage state), the sensing function in the network device is implemented by using a user sensing module in an idle state in the main communication system. Either the low power consumption sensing SoC or the main communication system operates in turn. The network device has the following features:

Newly-added hardware: A low power consumption chip SoC used for user sensing and a possible circuit are added to the network device. As shown in FIG. 10, the low power consumption chip SoC may include one or more of the following modules:
Logic control: (1) stores a beacon sequence with low power consumption; and (2) after determining whether a user exists, sends a control signal to enable or disable the main communication system.
Radio frequency front end: includes radio frequency front end transmit (transmit, TX) and radio frequency front end receive (receive, RX).
Radio frequency front end TX: configured to send a first signal by sending a pre-stored fixed sequence as a radio frequency signal.
Radio frequency front end RX: configured to receive a second signal, for example, perform matched filtering on the second signal at a radio frequency.
Built-in antenna: An SoC antenna may be used because signal power is low.

It should be noted that the one or more modules may be disposed in an independent low power consumption SoC, or may reuse hardware in the main communication system. This is not limited herein.

As shown in FIG. 10, user sensing in the energy saving sensing state and state control of the network device are implemented on the low power consumption sensing SoC. In addition, user sensing in an idle state in a normal coverage state is enhanced on a broadcast channel and a PRACH. Therefore, hardware of the network device may be reused, that is, the sensing function in the network device is implemented by using a user sensing module in an idle state in the main communication system.

In a possible implementation, to implement functions in the method provided in this application, the devices that perform the foregoing method may include a hardware structure and/or a software module, and implement the functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

Refer to FIG. 11. This application provides a communication apparatus 1100. The apparatus 1100 includes a processing unit 1101 and a transceiver unit 1102.

In an implementation example, the communication apparatus 1100 may implement the functions of the terminal device in the foregoing method, and therefore can also implement the beneficial effects of the foregoing method. In this application, the communication apparatus 1100 may be a terminal device, or may be a software module, an integrated circuit, an element, or the like in the terminal device, for example, a chip. This is not limited. The following provides descriptions by using an example in which the communication apparatus 1100 is the terminal device.

Specifically, the transceiver unit 1102 is configured to receive a first signal of a first network device, where the first signal is used to sense a terminal device; the processing unit 1101 is configured to determine a second signal, where the second signal is used to respond to the first signal; and the transceiver unit 1102 is further configured to send the second signal.

In a possible implementation, the first signal of the first network device is the same as a first signal of a second network device.

In a possible implementation, a signal sequence carried by the first signal is preconfigured.

In a possible implementation, that the transceiver unit 1102 is configured to receive the first signal from the first network device includes: The transceiver unit 1102 receives the first signal after the processing unit 1101 determines that no synchronization signal block SSB can be found.

In a possible implementation, the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 111;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

In a possible implementation, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

In a possible implementation, the first signal carries first indication information, and the first indication information is used to trigger the second signal.

In a possible implementation, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

In an implementation example, the communication apparatus 1100 may implement the functions of the first network device in the foregoing method, and therefore can also implement the beneficial effects of the foregoing method. In this application, the communication apparatus 1100 may be a first network device, or may be a software module, an integrated circuit, an element, or the like in the first network device, for example, a chip, a DU, an RU, a BBU, or an RRU. This is not limited. The following provides descriptions by using an example in which the communication apparatus 1100 is the first network device.

Specifically, the processing unit 1101 is configured to determine a first signal, where the first signal is used to sense a terminal device; and the transceiver unit 1102 is configured to send the first signal.

In a possible implementation, the first signal of the first network device is the same as a first signal of a second network device.

In a possible implementation, a signal sequence carried by the first signal is preconfigured.

In a possible implementation, before the transceiver unit 1102 receives the second signal, the processing unit 1101 determines not to send a synchronization signal block SSB, where the second signal is used to respond to the first signal; and/or after the transceiver unit 1102 receives N second signals, the transceiver unit 1102 is further configured to send the SSB, where N is a positive integer.

In a possible implementation, the apparatus is used in the first network device. Before the transceiver unit 1102 receives the second signal, the first network device is in a first mode; and after the transceiver unit 1102 receives the second signal, the processing unit 1101 updates the first network device from the first mode to a second mode, where power consumption of the first mode is lower than power consumption of the second mode.

In a possible implementation, when the first network device is in the first mode, the transceiver unit 1102 determines not to send one or more of the following: an SSB, information carried by a physical downlink control channel PDCCH, information carried by a physical downlink shared channel PDSCH, a demodulation reference signal DMRS, and a channel state information-reference signal CSI-RS; and/or the transceiver unit 1102 determines not to receive one or more of the following: information carried by a physical random access channel PRACH, information carried by a physical uplink control channel PUCCH, information carried by a physical uplink shared channel PUSCH, a DMRS, and a sounding reference signal SRS.

In a possible implementation, the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by the SSB; and
a signal sequence carried by the first signal is orthogonal to a signal sequence carried by the second signal.

In a possible implementation, the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of a random access preamble is less than or equal to a threshold;
a location of a time unit that carries the second signal is determined based on a random number; and
a deviation between a time domain location of the first signal and a time domain location of the second signal is preconfigured.

In a possible implementation, the first signal carries first indication information, the first indication information is used to trigger the second signal, and the second signal is used to respond to the first signal.

In a possible implementation, after the transceiver unit 1102 receives the second signal, the transceiver unit 1102 is further configured to send an SSB, where the second signal is used to respond to the first signal, and M is a positive integer; and/or after the processing unit 1101 determines that the second signal is not received, the processing unit 1101 is further configured to determine not to send the SSB.

In a possible implementation, the apparatus is used in the first network device. Before the transceiver unit 1102 receives the second signal, the first network device is in a second mode; and after the processing unit 1101 determines that the second signal is not received, the processing unit 1101 updates the first network device from the second mode to a first mode, where power consumption of the first mode is lower than power consumption of the second mode.

In a possible implementation, the second signal satisfies at least one of the following:
a signal sequence carried by the second signal is preconfigured;
the second signal does not carry a random access preamble;
the second signal is carried on a PRACH;
a difference between a power spectral density of the second signal and a power spectral density of a random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

In a possible implementation, the apparatus is used in the first network device. The first network device includes a first communication module and a second communication module, where the first signal is sent via the first communication module, and the SSB is sent via the second communication module; or the first network device includes a third communication module, where the first signal is sent via the third communication module, the third communication module is configured to send at least one of the following: an SSB, information carried by a PDCCH, information carried by a PDSCH, a DMRS, or a CSI-RS, and the third communication module is configured to receive at least one of the following: information carried by a PRACH, information carried by a PUCCH, information carried by a PUSCH, or an SRS.

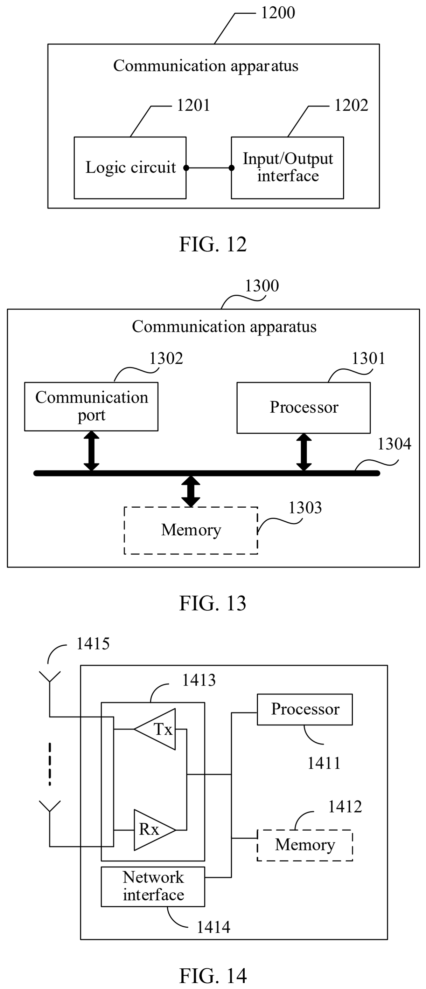

It should be noted that, for details about content such as an information execution process of the units of the communication apparatus 1100, refer to the descriptions in the foregoing method of this application. The details are not described herein again.FIG. 12 is another diagram of a structure of a communication apparatus 1200 according to this application. The communication apparatus 1200 includes at least a logic circuit 1201. The communication apparatus 1200 may be a chip or an integrated circuit.

Optionally, the communication apparatus further includes an input/output interface 1202.

The transceiver unit 1102 shown in FIG. 11 may be a communication interface. The communication interface may be the input/output interface 1202 in FIG. 12, and the input/output interface 1202 may include an input interface and an output interface. Alternatively, the communication interface may be a transceiver circuit, and the transceiver circuit may include an input interface circuit and an output interface circuit.

Optionally, the input/output interface 1202 is configured to receive a first signal of a first network device, where the first signal is used to sense a terminal device; the logic circuit 1201 may be configured to determine a second signal, where the second signal is used to respond to the first signal; and the input/output interface 1202 is further configured to send the second signal. It should be understood that the logic circuit 1201 and the input/output interface 1202 may further perform other steps performed by the terminal device in any one of the foregoing examples, and implement corresponding beneficial effects. Details are not described herein again.

Optionally, the logic circuit 1201 may be configured to determine a first signal, where the first signal is used to sense a terminal device; and the input/output interface 1202 is configured to send the first signal. It should be understood that the logic circuit 1201 and the input/output interface 1202 may further perform other steps performed by the first network unit in any one of the foregoing examples, and implement corresponding beneficial effects. Details are not described herein again.

In a possible implementation, the processing unit 1101 shown in FIG. 11 may be the logic circuit 1201 in FIG. 12.

Optionally, the logic circuit 1201 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method.

In a possible implementation, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

In a possible implementation, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processing unit, CPU), network processors (network processor, NP), digital signal processors (digital signal processor, DSP), micro controller units (micro controller unit, MCU), programmable logic devices (programmable logic device, PLD) or other integrated chips, or any combination of the foregoing chips or processors.FIG. 13 shows a communication apparatus 1300 in the foregoing implementations according to this application. The communication apparatus 1300 may be specifically a communication apparatus used as a terminal device in the foregoing implementations. In the example shown in FIG. 13, the terminal device is implemented by using a terminal device (or a component in the terminal device).

In a diagram of a possible logical structure of the communication apparatus 1300, the communication apparatus 1300 may include but is not limited to at least one processor 1301 and a communication port 1302.

Further, optionally, the apparatus may further include at least one of a memory 1303 and a bus 1304. In this application, the at least one processor 1301 is configured to control an action of the communication apparatus 1300.

In addition, the processor 1301 may be a central processing unit, a general-purpose processor, a digital signal processor, an application-specific integrated circuit, a field programmable gate array or another programmable logic device, a transistor logic device, a hardware component, or any combination thereof. The processor may implement or perform various examples of logic blocks, modules, and circuits described with reference to content disclosed in this application. Alternatively, the processor may be a combination of processors implementing a computing function, for example, a combination of one or more microprocessors or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1300 shown in FIG. 13 may be specifically configured to: implement steps implemented by the terminal device in the foregoing methods, and implement technical effects corresponding to the terminal device. For a specific implementation of the communication apparatus shown in FIG. 13, refer to the descriptions in the foregoing methods. Details are not described herein again.FIG. 14 is a diagram of a structure of a communication apparatus 1400 in the foregoing example according to this application. The communication apparatus 1400 may be specifically a communication apparatus used as the first network device in the foregoing example. For a structure of the communication apparatus, refer to the structure shown in FIG. 14.

The communication apparatus 1400 includes at least one processor 1411 and at least one network interface 1414.

Further, optionally, the communication apparatus further includes at least one memory 1412, at least one transceiver 1413, and one or more antennas 1415. The processor 1411, the memory 1412, the transceiver 1413, and the network interface 1414 are connected, for example, connected through a bus. In this application, the connection may include various types of interfaces, transmission lines, buses, or the like. This is not limited in this application. The antenna 1415 is connected to the transceiver 1413. The network interface 1414 is configured to enable the communication apparatus to communicate with another communication device through a communication link. For example, the network interface 1414 may include a network interface between the communication apparatus and a core network device, for example, an S 1 interface. The network interface may include a network interface between the communication apparatus and another communication apparatus (for example, another network device or core network device), for example, an X2 or Xn interface.

The processor 1411 is mainly configured to: process a communication protocol and communication data, control the entire communication apparatus, execute a software program, and process data of the software program, for example, is configured to support the communication apparatus in performing actions described in the foregoing implementation process. The communication apparatus may include a baseband processor and a central processing unit. The baseband processor is mainly configured to process the communication protocol and the communication data. The central processing unit is mainly configured to: control the entire communication apparatus, execute the software program, and process the data of the software program. Functions of the baseband processor and the central processing unit may be integrated into the processor 1411 in FIG. 14. A person skilled in the art may understand that the baseband processor and the central processing unit each may be an independent processor, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the memory in a form of a software program, and the processor executes the software program to implement a baseband processing function.

The memory is mainly configured to store the software program and data. The memory 1412 may exist independently, and is connected to the processor 1411. Optionally, the memory 1412 may be integrated with the processor 1411, for example, integrated into a chip. The memory 1412 can store program code for executing the technical solutions in this application, and the processor 1411 controls the execution. Various types of executed computer program code may also be considered as a driver of the processor 1411.

FIG. 14 merely shows one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1413 may be configured to support receiving or sending of a radio frequency signal between the communication apparatus and the terminal. The transceiver 1413 may be connected to the antenna 1415. The transceiver 1413 includes a transmitter Tx and a receiver Rx. Specifically, the one or more antennas 1415 may receive a radio frequency signal. The receiver Rx of the transceiver 1413 is configured to: receive the radio frequency signal from the antenna, convert the radio frequency signal into a digital baseband signal or a digital intermediate frequency signal, and provide the digital baseband signal or the digital intermediate frequency signal to the processor 1411, so that the processor 1411 performs further processing, for example, demodulation and decoding, on the digital baseband signal or the digital intermediate frequency signal. In addition, the transmitter Tx of the transceiver 1413 is further configured to: receive a modulated digital baseband signal or digital intermediate frequency signal from the processor 1411, convert the modulated digital baseband signal or digital intermediate frequency signal into a radio frequency signal, and send the radio frequency signal through the one or more antennas 1415. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal, to obtain a radio frequency signal. A sequence of the up mixing processing and the digital-to-analog conversion processing is adjustable. The digital baseband signal and the digital intermediate frequency signal may be collectively referred to as a digital signal.

The transceiver 1413 may also be referred to as a transceiver module, a transceiver machine, a transceiver apparatus, or the like. Optionally, a device that is in the transceiver module and that is configured to implement a receiving function may be considered as a receiving unit, and a device that is in the transceiver module and that is configured to implement a sending function may be considered as a sending unit. In other words, the transceiver module includes the receiving unit and the sending unit. The receiving unit may also be referred to as a receiver, an input port, a receiver circuit, or the like. The sending unit may be referred to as a transmitter, a transmitter machine, a transmitter circuit, or the like.

It should be noted that the communication apparatus 1400 shown in FIG. 14 may be specifically configured to: implement steps implemented by the first network device in the foregoing methods, and implement technical effects corresponding to the first network device. For a specific implementation of the communication apparatus 1400 shown in FIG. 14, refer to the descriptions in the foregoing methods. Details are not described herein again.

Division into modules in this application is an example, is merely logical function division, and may be other division in an actual implementation. In addition, functional modules in this application may be integrated into one processor, or may exist alone physically, or two or more modules may be integrated into one module. The integrated module may be implemented in a form of hardware, or may be implemented in a form of a software functional module.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving a first signal of a first network device, wherein the first signal is used to sense a terminal device, and the first signal of the first network device is the same as a first signal of a second network device; and
sending a second signal, wherein the second signal is used to respond to the first signal.

2. The method according to claim 1, wherein a signal sequence carried by the first signal is preconfigured.

3. The method according to claim 2, wherein receiving the first signal of the first network device comprises:
receiving the first signal after determining that no synchronization signal block SSB can be found.

4. The method according to claim 2 or 3, wherein the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by an SSB; and
a signal sequence carried by the first signal is orthogonal to a signal sequence carried by the second signal.

5. The method according to any one of claims 2 to 4, wherein the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of the random access preamble is less than or equal to a threshold;
a location of a time unit that carries the second signal is determined based on a random number; and
a deviation between a time domain location of the first signal and a time domain location of the second signal is preconfigured.

6. The method according to claim 1, wherein the first signal carries first indication information, and the first indication information is used to trigger the second signal.

7. The method according to claim 6, wherein the second signal satisfies at least one of the following:
a signal sequence carried by the second signal is preconfigured;
the second signal is carried on a random access channel PRACH;
the second signal does not carry a random access preamble;
a difference between a power spectral density of the second signal and a power spectral density of the random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

8. A communication method, comprising:
determining a first signal, wherein the first signal is used to sense a terminal device, and the first signal of a first network device is the same as a first signal of a second network device; and
sending the first signal.

9. The method according to claim 8, wherein a signal sequence carried by the first signal is preconfigured.

10. The method according to claim 9, wherein the method further comprises:
before receiving a second signal, determining not to send a synchronization signal block SSB, wherein the second signal is used to respond to the first signal; and/or
sending the SSB after receiving N second signals, wherein N is a positive integer.

11. The method according to claim 9 or 10, wherein
before receiving the second signal, the first network device is in a first mode; and
after receiving the second signal, the first network device is updated from the first mode to a second mode, wherein power consumption of the first mode is lower than power consumption of the second mode.

12. The method according to claim 11, wherein when the first network device is in the first mode, the method further comprises:
determining not to send one or more of the following: an SSB, information carried by a physical downlink control channel PDCCH, information carried by a physical downlink shared channel PDSCH, a demodulation reference signal DMRS, and a channel state information-reference signal CSI-RS; and/or
determining not to receive one or more of the following: information carried by a physical random access channel PRACH, information carried by a physical uplink control channel PUCCH, information carried by a physical uplink shared channel PUSCH, a DMRS, and a sounding reference signal SRS.

13. The method according to any one of claims 9 to 12, wherein the first signal satisfies at least one of the following:
the first signal is used for time synchronization and/or frequency synchronization;
the first signal is a periodic signal;
the first signal does not carry cell identifier information;
the first signal does not carry a primary synchronization signal;
the first signal does not carry a secondary synchronization signal;
the first signal does not carry system information and/or a broadcast message;
the first signal does not carry a master information block MIB;
the first signal does not carry at least one of system information blocks SIB 1 to SIB 19;
the first signal does not carry a paging message;
a difference between a power spectral density of the first signal and a power spectral density of an SSB is less than or equal to a threshold;
a difference between a center frequency of the first signal and a center frequency of an SSB is less than or equal to a threshold;
a bandwidth occupied by the first signal is less than or equal to a bandwidth occupied by an SSB; and
a signal sequence carried by the first signal is orthogonal to a signal sequence carried by the second signal.

14. The method according to any one of claims 9 to 13, wherein the second signal satisfies at least one of the following:
a signal sequence carried by the second signal is preconfigured;
the second signal does not carry a random access preamble;
a frequency domain resource carrying the second signal is partially or completely the same as a frequency domain resource carrying the first signal;
a difference between a power spectral density of the second signal and a power spectral density of the random access preamble is less than or equal to a threshold;
a location of a time unit that carries the second signal is determined based on a random number; and
a deviation between a time domain location of the first signal and a time domain location of the second signal is preconfigured.

15. The method according to claim 8, wherein the first signal carries first indication information, the first indication information is used to trigger the second signal, and the second signal is used to respond to the first signal.

16. The method according to claim 15, wherein the method further comprises:
sending an SSB after receiving the second signal, wherein the second signal is used to respond to the first signal; and/or
after determining that the second signal is not received, determining not to send the SSB.

17. The method according to claim 16, wherein
when receiving the second signal, the first network device keeps in a second mode; and
after determining that the second signal is not received, the first network device is updated from the second mode to a first mode, wherein power consumption of the first mode is lower than power consumption of the second mode.

18. The method according to any one of claims 15 to 17, wherein the second signal satisfies at least one of the following:
a signal sequence carried by the second signal is preconfigured;
the second signal does not carry a random access preamble;
the second signal is carried on a random access channel PRACH;
a difference between a power spectral density of the second signal and a power spectral density of the random access preamble is less than or equal to a threshold;
a difference between a center frequency of the second signal and a center frequency of a random access preamble is less than or equal to a threshold;
a bandwidth occupied by the second signal is less than or equal to a bandwidth occupied by a random access preamble;
a location of a time unit that carries the second signal is determined based on a random number; and
a deviation between a time domain location of the first signal and a time domain location of the second signal is preconfigured.

19. The method according to claim 10 or 16, wherein the method is applied to the first network device; and the first network device comprises a first communication module and a second communication module, wherein the first signal is sent via the first communication module, and the SSB is sent via the second communication module; or
the first network device comprises a third communication module, wherein the first signal is sent via the third communication module, and the third communication module is configured to: send or receive at least one of the following:
an SSB, information carried by a physical downlink control channel PDCCH, information carried by a physical downlink shared channel PDSCH, a demodulation reference signal DMRS, a channel state information-reference signal CSI-RS, information carried by a physical random access channel PRACH, information carried by a physical uplink control channel PUCCH, information carried by a physical uplink shared channel PUSCH, a DMRS, and a sounding reference signal SRS.

20. A communication apparatus, configured to: perform the method according to any one of claims 1 to 7, or perform the method according to any one of claims 8 to 19.

21. A communication apparatus, comprising at least one processor, wherein the at least one processor is coupled to a memory; and
the at least one processor is configured to perform the method according to any one of claims 1 to 7; or the processor is configured to perform the method according to any one of claims 8 to 19.

22. A communication system, comprising a communication apparatus configured to perform the method according to any one of claims 1 to 7 and a communication apparatus configured to perform the method according to any one of claims 8 to 19.

23. A computer-readable storage medium, wherein the medium stores instructions, and when the instructions are executed by a computer, the method according to any one of claims 1 to 19 is implemented.

24. A computer program product, comprising instructions, wherein when the instructions are run on a computer, the computer is enabled to perform the method according to any one of claims 1 to 19.
